(19) Europäisches Patentamt
European Patent Office
Office européen des brevets

(11) **EP 1 725 840 B1**

(12) **EUROPÄISCHE PATENTSCHRIFT**

(45) Veröffentlichungstag und Bekanntmachung des Hinweises auf die Patenterteilung:
**25.11.2020   Patentblatt 2020/48**

(51) Int Cl.:
***G01F 15/02*** *(2006.01)*          ***G01N 11/16*** *(2006.01)*
***G01N 9/00*** *(2006.01)*           ***G01F 1/84*** *(2006.01)*

(21) Anmeldenummer: **05717067.2**

(22) Anmeldetag: **16.03.2005**

(86) Internationale Anmeldenummer:
**PCT/EP2005/051200**

(87) Internationale Veröffentlichungsnummer:
**WO 2005/090926 (29.09.2005 Gazette 2005/39)**

(54) **IN-LINE-MESSGERÄT**

IN-LINE MEASURING DEVICE

APPAREIL DE MESURE EN LIGNE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **19.03.2004   DE 102004014029**
**30.04.2004   DE 102004021690**

(43) Veröffentlichungstag der Anmeldung:
**29.11.2006   Patentblatt 2006/48**

(73) Patentinhaber: **Endress+Hauser Flowtec AG**
**4153 Reinach (CH)**

(72) Erfinder:
• **RIEDER, Alfred**
**84032 Landshut (DE)**
• **FUCHS, Michael**
**79427 Eschbach (DE)**

• **DRAHM, Wolfgang**
**85435 Erding (DE)**
• **ITIN, Ibho**
**CH-4410 Liestal (CH)**
• **SPRICH, Hans-Jörg**
**79650 Schopfheim (DE)**
• **WYSS, Samuel**
**CH-4123 Allschwill (CH)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
**US-A- 5 448 921          US-A1- 2003 233 878**
**US-B1- 6 513 393**

EP 1 725 840 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein In-Line-Meßgerät mit einem Messaufnehmer vom Vibrationstyp, insb. ein Coriolis-Massedurchfluß-/ Dichtemeßgerät, für ein in einer Rohrleitung strömendes, insb. zwei- oder mehrphasiges, Medium sowie ein Verfahren zum Erzeugen eines eine physikalische Meßgröße des Mediums, beipielsweise einen Massedurchfluß, eine Dichte und/oder eine Viskosität des Mediums, repräsentierenden Messwerts mittels eines solchen Meßaufnehmers.

In der Prozeß-Meß- und Automatisierungstechnik werden für die Messung physikalischer Parameter eines in einer Rohrleitung strömenden Mediums, wie z.B. dem Massedurchfluß, der Dichte und/oder der Viskosität, oftmals solche In-Line-Meßgeräte, insb. Coriolis-Massendurchfluß-Meßgeräte, verwendet, die mittels eines in den Verlauf der mediumsführenden Rohrleitung eingesetzten, im Betrieb vom Medium durchströmten Meßaufnehmers vom Vibrationstyp und einer daran angeschlossenen Meß- und Betriebsschaltung, im Medium Reaktionskräfte, wie z.B. mit dem Massedurchfluß korrespondierende Corioliskräfte, mit der Dichte korrespondierende Trägheitskräfte oder mit der Viskosität korrespondierende Reibungskräfte etc., bewirken und von diesen abgeleitet ein den jeweiligen Massedurchfluß, ein die jeweilige Viskosität und/oder ein die jeweilige Dichte des Mediums repräsentierendes Meßsignal erzeugen. Derartige In-Line-Meßgeräte mit einem Meßaufnehmer vom Vibrationstyp sowie deren Wirkungsweise sind dem Fachmann an und für sich bekannt und z.B. in der WO-A 03/095950, WO-A 03/095949, WO-A 03/076880, der

WO-A 02/37063, der WO-A 01/33174, der WO-A 00/57141, der

WO-A 99/39164, der WO-A 98/07009, der WO-A 95/16897, der

WO-A 88/03261, der US 2003/0208325, der US-B 66 91 583, der

US-B 66 51 51 13, der US-B 65 13 393, der US-B 65 05 519, der

US-A 60 06 609, der US-A 58 69 770, der US-A 57 96 011, der

US-A 56 16 868, der US-A 56 02 346, der US-A 56 02 345, der

US-A 55 31 126, der US-A 53 01 557, der US-A 52 53 533, der

US-A 52 18 873, der US-A 50 69 074, der US-A 48 76 898, der

US-A 47 33 569, der US-A 46 60 421, der US-A 45 24 610, der

US-A 44 91 025, der US-A 41 87 721, der EP-A 1 291 639, der

EP-A 1 281 938, der EP-A 1 001 254 oder der EP-A 553 939 der US-A 5 448 921, der US 2003/233878 A1 ausführlich und detailliert beschrieben.

Zum Führen des Mediums umfassen die Meßaufnehmer jeweils mindestens ein in einem, beispielsweise rohr- oder kastenförmigen, Tragrahmen gehaltertes Meßrohr mit einem geraden Rohrsegment, das zum Erzeugen oben genannter Reaktionskräfte im Betrieb - angetrieben von einer elektro-mechanischen Erregeranordnung - vibrieren gelassen wird. Zum Erfassen, insb. einlassseitiger und auslaßseitiger, Vibrationen des Rohrsegments weisen die Meßaufnehmer ferner jeweils eine auf Bewegungen des Rohrsegments reagierende physikalisch-elektrische Sensoranordnung auf.

Bei Coriolis-Massedurchflußmeßgeräten beruht die Messung des Massedurchflusses eines in einer Rohrleitung strömenden Mediums beispielsweise darauf, daß das Medium durch das in Rohrleitung eingefügte und im Betrieb lateral zu einer Messrohrachse schwingende Meßrohr strömen gelassen wird, wodurch im Medium Corioliskräfte induziert werden. Diese wiederum bewirken, daß einlaßseitige und auslaßseitige Bereiche des Meßrohrs zueinander phasenverschoben schwingen. Die Größe dieser Phasenverschiebungen dient als ein Maß für den Massedurchfluß. Die Schwingungen des Meßrohrs werden daher mittels zweier entlang des Meßrohres voneinander beabstandeter Schwingungssensoren der vorgenannten Sensoranordnung erfaßt und in Schwingungsmeßsignale gewandelt, aus deren gegenseitiger Phasenverschiebung der Massedurchfluß abgeleitet wird. Bereits die eingangs referierte

US-A 41 87 721 erwähnt ferner, daß mittels solcher In-Line-Meßgeräte auch die momentane Dichte des strömenden Mediums meßbar ist, und zwar anhand einer Frequenz wenigstens eines der von der Sensoranordnung gelieferten Schwingungsmeßsignale. Überdies wird zumeist auch eine Temperatur des Mediums in geeigneter Weise direkt gemessen, beispielsweise mittels eines am Meßrohr angeordneten Temperatursensors. Zudem können gerade Meßrohre bekanntlich, zu Torsionsschwingungen um eine im wesentlichen mit der Messrohrlängsachse parallel verlaufenden oder koinzidierenden Torsions-Schwingungsachse angeregt, bewirken, daß im hindurchgeführten Medium radiale Scherkräfte erzeugt werden, wodurch wiederum den Torsionsschwingungen signifikant Schwingungsenergie entzogen und im Medium dissipiert wird. Daraus resultierend erfolgt eine erhebliche Bedämpfung der Torsionsschwingungen des schwingenden Meßrohrs zu deren Aufrechterhaltung demzufolge dem Meßrohr zusätzlich elektrische Erregerleistung zugeführt werden muß. Abgeleitet von einer zum Aufrechterhalten der Torsionsschwingungen des Meßrohrs erforderlichen elektrischen Erregerleistung, kann in der dem Fachmann bekannten Weise mittels des Meßaufnehmers so auch eine Viskosität des Mediums zumindest nährungsweise bestimmt werden, vgl. hierzu insb. auch die US-A 45 24 610, die US-A 52 53 533, die US-A 60 06 609 oder die US-B 66 51 513. Es kann daher im folgenden ohne weiteres vorausgesetzt werden, daß - selbst wenn nicht ausdrücklich beschrieben - mittels moderner In-Line-Meßgeräte mit einem Messaufnehmer vom Vibationstyp, insb. mittels Coriolis-Massendurchfluß-Meßgeräten, jedenfalls auch Dichte, Viskosität und/oder Temperatur des Mediums gemessen werden können, zumal diese bei der Massendurchflußmessung ohnehin zur Kompensation von Meßfehlern infolge schwankender Mediumsdichte und/oder Mediumsviskosität stets heran zu ziehen sind, vgl. hierzu insb. die bereits erwähnten

US-B 65 13 393, US-A 60 06 609, US-A 56 02 346, WO-A 02/37063,

WO-A 99/39164 oder auch die WO-A 00/36379.

Bei der Verwendung von In-Line-Meßgeräten mit einem Meßaufnehmer vom Vibrationstyp hat es sich jedoch, wie beispielsweise auch in der

JP-A 10-281846, der WO-A 03/076880, der EP-A 1 291 639, der

US-B 65 05 519 oder der US-A 45 24 610 diskutiert, gezeigt, daß bei inhomogenen Medien, insb. zwei- oder mehrphasigen Medien, die von den Schwingungen des Meßrohrs abgeleiteten Schwingungsmeßsignale, insb. auch die erwähnte Phasenverschiebung, trotz dem Viskosität und Dichte in den einzelnen Mediumsphasen sowie auch der Massendurchfluß praktisch konstantgehalten und/oder entsprechend mitberücksichtigt werden, in erheblichem Maße Schwankungen unterliegen und so ggf. für die Messung des jeweiligen physikalischen Parameters ohne abhelfende Maßnahmen völlig unbrauchbar werden können. Solche inhomogenen Medien können beispielsweise Flüssigkeiten sein, in die, wie z.B. bei Dosier- oder Abfüllprozessen praktisch unvermeidbar, ein in der Rohrleitung vorhandenes Gas, insb. Luft, eingetragen ist oder aus denen ein gelöstes Medium, z.B. Kohlendioxid, ausgast und zur Schaumbildung führt. Als ein weitere Beispiele für solche inhomogenen Medien seien ferner auch Emulsionen sowie Naß- oder Sattdampf genannt. Als Ursachen für die mit der Messung von inhomogenen Medien mittels Messaufnehmern vom Vibrationstyp seien exemplarisch das einseitige Anlagern oder Absetzen von in Flüssigkeiten mitgeführten Gasblasen oder Feststoffpartikeln innen an der Messrohrwand und der sogenannte "Bubble-Effekt" erwähnt, bei dem in der Flüssigkeit mitgeführte Gasblasen als Strömungskörper für quer zur Messrohrlängsachse beschleunigte Flüssigkeitsteilvolumina wirkt.

Während zur Verringerung der mit zwei- oder mehrphasigen Medien einhergehenden Meßfehler in der WO-A 03/076880 eine der eigentlichen Durchflußmessung vorausgehende Strömungs- bzw. Mediumskonditionierung vorgeschlagen ist, wird beispielsweise sowohl in der JP-A 10-281846 als auch in der US-B 65 05 519 jeweils eine, insb. auf der Auswertung von Defiziten zwischen einer hochgenau gemessenen, tatsächlichen Mediumsdichte und einer mittels Coriolis-Massedurchflußmessgeräten im Betrieb ermittelten, scheinbaren Mediumsdichte beruhende, Korrektur der auf den Schwingungsmeßsignalen beruhenden Durchflußmessung, insb. der Massendurchflußmessung, beschrieben.

Im besonderen werden dafür vorab trainierter, ggf. auch adaptiver Klassifikatoren für die Schwingungsmesssignale vorgeschlagen. Die Klassifikatoren können beispielsweise als Kohonen-Karte oder Neuronales Netzwerk ausgelegt sein und die Korrektur entweder anhand einiger weniger im Betrieb gemessener Parametern, insb. dem Massedurchfluß und der Dichte, sowie weiteren davon abgeleiteten Merkmalen oder auch unter Verwendung eines eine oder mehrere Schwingungsperioden einschließenden Intervalls der Schwingungsmeßsignale vornehmen. Die Verwendung eines solchen Klassifikators birgt beispielsweise den Vorteil, daß im Vergleich zu herkömmlichen Coriolis-Massedurchfluß-/ Dichtemessern am Meßaufnehmer keine oder nur sehr geringfügige Änderungen vorgenommen werden müssen, sei es am mechanischen Aufbau, an der Erregeranordnung oder der diese steuernden Betriebsschaltung, die der speziellen Anwendung besonders angepaßt sind. Allerdings besteht ein erheblicher Nachteil solcher Klassifikatoren u.a. darin, daß im Vergleich zu herkömmlichen Coriolis-Massedurchflußmeßgerätn erhebliche Änderungen im Bereich der Meßwerterzeugung vor allem hinsichtlich der verwendeten Analog-zu-Digital-Wandler und der Mikroprozessoren erforderlich sind. Wie nämlich auch in der US-B 65 05 519 beschrieben, ist für eine derartige Signalauswertung beispielsweise bei der Digitalisierung der Schwingungsmeßsignale, die eine Schwingungsfrequenz von etwa 80 Hz aufweisen können, eine Abtastrate von etwa 55 kHz oder mehr für eine ausreichende Genauigkeit erforderlich. Anders gesagt, die Schwingungsmeßsignale sind mit einem Abtastverhältnis von weit über 600:1 abzutasten. Überdies fällt auch die in der digitalen Meßschaltung gespeicherte und ausgeführte Firmware entsprechend komplex aus. Ein weiterer Nachteil solcher Klassifikatoren ist auch darin zu sehen, daß sie auf die im Betrieb des Meßaufnehmers tatsächlich vorherrschenden Meßbedingungen, sei es die Einbausituation, das zu messende Medium und dessen zumeist veränderlichen Eigenschaften oder andere die Meßgenauigkeit beeinflussende Faktoren, trainiert und entsprechend validiert werden müssen. Aufgrund der hohen Komplexität des Zusammenspiels aller dieser Faktoren kann das Training und dessen Validierung abschließend zumeist nur vor Ort und für jeden Meßaufnehmer individuell erfolgen, was wiederum einen erheblichen Aufwand bei der Inbetriebnahme des Meßaufnehmers zur Folge hat. Im übrigen hat es sich auch gezeigt, daß derartige Klassifikations-Algorithmen, einerseits aufgrund der hohen Komplexität, andererseits infolgedessen, daß zumeist ein entsprechendes physikalisch-mathematisches Modells mit technisch relevanten oder nachvollziehbaren Parameter nicht explizit vorhanden ist, Klassifikatoren eine sehr geringe Transparenz aufweisen und somit oftmals schwer vermittelbar sind. Damit einhergehend können ohne weiteres erhebliche Vorbehalte beim Kunden auftreten, wobei solche Akzeptanzprobleme beim Kunden insb. dann auftreten können, wenn es sich beim verwendeten Klassifikator zu dem um einen selbst adaptierenden, beispielsweise ein Neuronales Netzwerk, handelt.

Als eine weitere Möglichkeit zur Umgehung des Problems mit inhomogenen Medien wird beispielsweise bereits in der US-A 45 24 610 vorgeschlagen, den Meßaufnehmer so einzubauen, daß das gerade Meßrohr im wesentlichen senkrecht verläuft und somit ein Anlagern solcher störender, insb. gasförmiger, Inhomogenitäten weitestgehend verhindert wird. Hierbei handelt es sich jedoch um eine sehr spezielle, in der industriellen Prozeßmeßtechnik nicht immer ohne weiters realisierbare Lösung. Zum einen müßte nämlich für diesen Fall die Rohrleitung, in die der Meßaufnehmer eingefügt werden soll, ggf. an diesen angepaßt werden und nicht umgekehrt, was für den Anwender einen erhöhten Mehraufwand bei der Realisierung der Messstelle bedeuten kann. Zum anderen kann es sich bei den Meßrohren, wie bereits erwähnt, auch um solche mit einer gekrümmten Rohrform handeln, so daß das Problem auch durch eine Anpassung der Einbaulage nicht immer befriedigend gelöst werden kann. Es hat sich hierbei außerdem gezeigt, daß die vorgenannten Verfälschungen des Meßsignals auch bei Verwendung eines senkrecht eingebauten, geraden Meßrohrs nicht unbedingt sicher vermieden werden können.

Eine Aufgabe der Erfindung besteht daher darin, ein entsprechendes In-Line-Meßgerät, insb. ein Coriolis-Massendurchflußmessgerät, anzugeben, das geeignet ist, die zu messende physikalische Meßgröße, insb. den Massendurchfluß, die Dichte und/oder die Viskosität, auch bei inhomogenen, insb. zwei- oder mehrphasigen, Medien sehr genau zu messen, und zwar möglichst mit einem Messfehlerbetrag von kleiner 10% bezogen auf die tatsächliche Meßgröße. Eine weitere Aufgabe besteht darin, ein entsprechendes Verfahren für die Erzeugung eines entsprechenden Meßwerts anzugeben.

Zur Lösung dieser Aufgabe besteht die Erfindung in einem In-Line-Meßgerät, insb. Coriolis-Massedurchfluß-/Dichtemessgerät und/oder Viskositätsmeßgerät, zum Messen wenigstens einer physalischen Meßgröße, insb. eines Massedurchflusses, einer Dichte und/oder einer Viskosität, eines in einer Rohrleitung geführten, insb. zwei-oder mehrphasigen, Mediums. Das In-Line-Meßgerät umfasst dafür einen Meßaufnehmer vom Vibrationstyp und eine mit dem Meßaufnehmer elektrisch gekoppelte Meßgerät-Elektronik. Der Meßaufnehmer weist mindestens ein in den Verlauf der Rohrleitung eingesetztes, insb. im wesentlichen gerades, und dem Führen des zu messenden Mediums dienendes Meßrohr, das mit der angeschlossenen Rohrleitung kommuniziert, eine auf das Meßrohr einwirkende Erregeranordnung zum Vibrierenlassen des wenigstens einen Messrohrs sowie eine Sensoranordnung zum Erfassen von Vibrationen des wenigstens einen Meßrohrs, die wenigstens ein Schwingungen des Meßrohrs repräsentierendes Schwingungsmeßsignal liefert, auf. Die Erregeranordnung versetzt das Meßrohr im Betrieb zumindest zeitweise und/oder zumindest anteilig in Lateralschwingungen, insb. Biegeschwingungen. Darüberhinaus versetzt die Errgeranordnung das Messrohr im Betrieb zumindest zeitweise und/oder zumindest anteilig in, insb. mit den Lateralschwingungen alternierende oder diesen zeitweise überlagerte, Torsionsschwingungen um eine gedachte, mit dem Meßrohr im wesentlichen fluchtende, insb. als eine Trägheitshauptachse des Messrohrs ausgebildete, Messrohrlängsachse. Die Meßgerät-Elektronik liefert zumindest zeitweise einen die Erregeranordnung treibenden Erregerstrom. Ferner ermittelt die Meßgerät-Elektronik einen ersten Zwischenwert, der mit einem dem Aufrechterhalten der Lateralschwingungen des Meßrohrs dienenden Lateral-Stromanteil des Erregerstroms und/oder mit einer Dämpfung der Lateralschwingungen des Messrohrs korrespondiert.

Außerdem ermittelt die Meßgerät-Elektronik einen zweiten Zwischenwert, der mit einem dem Aufrechterhalten der Torsionsschwingungen des Meßrohrs dienenden Torsions-Stromanteil des Erregerstroms und/oder mit einer Dämpfung der Torsionsschwingungen des Messrohrs korrespondiert. Mittels des wenigstens einen Schwingungsmeßsignal und/oder mittels des Erregerstrom sowie unter Verwendung des ersten und des zweiten Zwischenwerts generiert die Meßgerät-Elektronik zumindest zeitweise wenigstens einen Meßwert, der die wenigstens eine zu messende physikalische Meßgröße, insb. den Massedurchfluß-Massedurchfluß, die Dichte oder die Viskosität des Mediums, repräsentiert.

Ferner besteht die Erfindung in einem Verfahren zum Messen einer physikalischen Meßgröße, insb. Massedurchflusses, einer Dichte und/oder einer Viskosität, eines in einer Rohrleitung strömenden, insb. zwei- oder mehrphasigen, Mediums, mittels eines In-Line-Meßgeräts mit einem Meßaufnehmer vom Vibrationstyp, insb. eines Coriolis-Massendurchflußmeßgeräts, und einer mit dem Meßaufnehmer elektrisch gekoppelten Meßgerät-Elektronik, welches Verfahren folgende Schritte umfasst:

- Strömenlassen des zu messenden Mediums durch wenigstens ein mit der Rohrleitung kommunizierendes Messrohr des Meßaufnehmers und Einspeisen eines Erregerstroms in eine mit dem das Medium führenden Meßrohr mechanisch gekoppelten Erregeranordnung zum Bewirken von mechanischen Schwingungen des Meßrohrs,
- Bewirken von Lateralschwingungen, insb. Biegeschwingungen, des Meßrohrs und Bewirken von, insb. den Lateralschwingungen überlagerten, Torsionsschwingungen des Meßrohrs,
- Erfassen von Vibrationen des Meßrohrs und Erzeugen wenigstens eines Schwingungen des Messrohrs repräsentierenden Schwingungsmeßsignals,
- Ermitteln eines vom Erregerstrom abgeleiteten ersten Zwischenwerts, dermit einem dem Aufrechterhalten der Lateralschwingungen des Meßrohrs dienenden Lateral-Stromanteil des Erregerstroms und/oder mit einer Dämpfung der Lateralschwingungen des Messrohrs korrespondiert,
- Ermitteln eines vom Erregerstrom abgeleiteten zweiten Zwischenwerts, der mit einem dem Aufrechterhalten der Torsionsschwingungen des Meßrohrs dienenden Torsions-Stromanteil des Erregerstroms und/oder mit einer Dämpfung der Torsionsschwingungen des Messrohrs korrespondiert, und
- Verwenden des wenigstens einen Schwingungsmeßsignals und/oder des Erregerstroms sowie des ersten und des zweiten Zwischenwerts zum Erzeugen eines die zu messenden physikalische Meßgröße repräsentierenden Meßwerts.

Nach einer ersten Ausgestaltung des In-Line-Meßgeräts der Erfindung ermittelt die Meßgerät-Elektronik einen von dem wenigstens einen Schwingungsmeßsignal abgeleiteten und/oder vom Erregerstrom abgeleiteten Anfangsmesswert, der mit der wenigstens einen zu messenden Meßgröße zumindest näherungsweise korrespondiert, und anhand des ersten und des zweiten Zwischenwerts einen Korrekturwert für den Anfangsmesswert, und generiert die Meßgerät-Elektronik den Meßwert mittels des Anfangsmesswerts und des Korrekturwerts.

Nach einer zweiten Ausgestaltung des In-Line-Meßgeräts der Erfindung führt das Meßrohr, angetrieben von der Erregeranordnung, Torsionsschwingungen mit einer Meßrohr-Torsisonsschwingfrequenz aus, die verschieden eingestellt ist von einer Meßrohr-Biegeschwingfrequenz mit der das Messrohr, angetrieben von der Erregeranordnung, Lateralschwingungen ausführt.

Nach einer dritten Ausgestaltung des In-Line-Meßgeräts der Erfindung kommuniziert das Messrohr mit der angeschlossenen Rohrleitung über ein in ein Einlaßende mündendes Einlaßrohrstück und über ein in ein Auslaßende mündendes Auslaßrohrstück, und umfasst der Meßaufnehmer einen am Einlaßende und am Auslaßende des Messrohrs fixierten, insb. auch mit der Erregeranordnung mechanischen gekoppelten, Gegenschwinger, der im Betrieb zumindest zeitweise, insb. gegenphasig zum Messrohr, vibriert.

Nach einer vierten Ausgestaltung des In-Line-Meßgeräts der Erfindung ermittelt die Meßgerät-Elektronik den Korrekturwert anhand eines Vergleichs des ersten Zwischenwerts mit dem zweiten Zwischenwert und/oder anhand einer zwischen dem ersten Zwischenwert und dem zweiten Zwischenwert bestehenden Differenz ermittelt.

Nach einer fünften Ausgestaltung des In-Line-Meßgeräts der Erfindung erzeugt die Meßgerät-Elektronik den ersten und/oder den zweiten Zwischenwert auch unter Verwendung des wenigstens einen Schwingungsmeßsignals.

Nach einer sechsten Ausgestaltung des In-Line-Meßgeräts der Erfindung repräsentiert der wenigstens eine Messwert eine Viskosität des im Messrohr strömenden Mediums, und ermittelt die Meßgerät-Elektronik auch den Anfangsmesswert anhand des die Erregeranordnung treibenden Erregerstroms und/oder eines Anteils des Erregerstroms.

Nach einer siebenten Ausgestaltung des In-Line-Meßgeräts der Erfindung repräsentiert der wenigstens eine Messwert eine Dichte des im Messrohr strömenden Mediums, und ermittelt die Messgerät-Elektronik den Anfangsmesswert unter Verwendung des wenigstens einen Schwingungsmeßsignals und/oder des Erregerstroms in der Weise, dass dieser mit der zu messenden Dichte und/oder mit einer Schwingungsfrequenz des wenigstens einen Schwingungsmeßsignals korrespondiert.

Nach einer achten Ausgestaltung des In-Line-Meßgeräts der Erfindung ermittelt die Meßgerät-Elektronik anhand des ersten und des zweiten Zwischenwerts zumindest zeitweise einen Konzentrations-Meßwert, der bei einem zwei- oder mehrphasigen Medium im Messrohr einen, insb. relative, Volumen- und/oder Massenanteil einer Mediumsphase repräsentiert.

Nach einer neunten Ausgestaltung des In-Line-Meßgeräts der Erfindung liefert die Sensoranordnung wenigstens ein erstes Schwingungsmeßsignal, das zumindest anteilig einlaßseitige Lateralschwingungen, insb. Biegeschwingungen, des Meßrohrs repräsentiert, und wenigstens ein zweites Schwingungsmeßsignal, das zumindest anteilig auslaßseitige Lateralschwingungen, insb. Biegeschwingungen, des Meßrohrs repräsentiert.

Nach einer zehnten Ausgestaltung des In-Line-Meßgeräts der Erfindung repräsentiert der wenigstens eine Messwert einen Massedurchfluß des im Messrohr strömenden Mediums, und ermittelt die Messgerät-Elektronik den Anfangsmesswert unter Verwendung der beiden Schwingungsmeßsignale in der Weise, dass dieser mit dem zu messenden Massedurchfluß und/oder mit einer Phasendifferenz zwischen den beiden Schwingungsmeßsignalen korrespondiert.

Nach einer ersten Ausgestaltung des Verfahrens der Erfindung umfasst der Schritt des Erzeugens des Meßwerts die Schritte:

- Entwickeln eines mit der zu messenden physikalischen Meßgröße zumindest näherungsweise korrespondierenden Anfangsmesswerts unter Verwendung des wenigstens einen Schwingungsmeßsignals und/oder des Erregerstroms,
- Erzeugen eines Korrekturwertes für den Anfangswert mittels des ersten und des zweiten Zwischenwerts, sowie
- Korrigieren des Anfangsmesswerts mittels des Korrekturwertes zum Erzeugen des Meßwerts.

Nach einer zweiten Ausgestaltung des Verfahrens der Erfindung umfasst der Schritt des Erzeugens des Korrekturwertes für den Anfangsmesswert die Schritte:

- Vergleichen des ersten Zwischenwerts mit dem zweiten Zwischenwert zum Ermitteln einer zwischen den beiden Zwischenwerten bestehenden Differenz und
- Ermitteln eines Konzentrations-Meßwerts, der bei einem zwei- oder mehrphasigen Medium im Messrohr einen, insb. relative, Volumen- und/oder Massenanteil einer Mediumsphase repräsentiert, unter Berücksichtigung der zwischen den beiden Zwischenwerten bestehenden Differenz.

**EP 1 725 840 B1**

Ein Grundgedanke der Erfindung besteht darin, den Messaufnehmer zwecks einer Korrektur oder Kompensation allfälliger Messfehler - hervorgerufen im besonderen durch Inhomogenitäten im zu messenden Medium - in einem Dual-Mode zu betreiben, bei dem das Messrohr abwechselnd und/oder alternierend in wenigstens zwei von einander im wesentlichen unabhängigen Schwingungsmoden vibrieren gelassen wird, nämlich einem Lateral-Schwingungsmode und einem Torsions-Schwingungsmode. Anhand von während des Dual-Modebetriebes ermittelten Betriebsparametern des Messaufnehmers, insb. dem für die Aufrechterhaltung der Lateralschwingung und der Torsionsschwingung des Messrohrs jeweils erforderlichen Erregerstrom, den Frequenzen und/oder Amplituden der Schwingungen des Messrohrs etc., können so auf eine sehr einfache Weise sehr genaue und erstaunlich robuste Korrekturwerte für die eigentlichen Messwerte ermittelt werden.

Die Erfindung beruht dabei im besonderen auf der Erkenntnis, daß die in den Meßaufnehmer zur Aufrechterhaltung von Lateralschwingungen des Meßrohrs eingespeiste Erregerleistung in einem hohen Maße von Inhomogenitäten im zu messenden Medium, wie z.B. eingeperlten Gasblasen oder mitgeführten Feststoffpartikeln etc., beeinflußt werden kann. Im Vergleich dazu ist die in den Meßaufnehmer zur Aufrechterhaltung von Torsionsschwingungen des Meßrohrs eingespeiste Erregerleistung jedoch in einem erheblich niedrigerem Maße von solchen Inhomogenitäten abhängig, so daß im Betrieb, basierend auf dieser Erregerleistung, insb. basierend auf dem für die Aufrechterehaltung der Torsionsschwingungen tatsächlich eingespeisten Erregerstromanteil, aktuelle Referenzwerte ermittelt werden können, mit deren Hilfe ein Vergleich der in entsprechender Weise für die Lateralschwingungen ermittelten Messwerte, beispielsweise dem für die Aufrechterehaltung der Lateralschwingungen tatsächlich eingespeisten Erregerstromanteil, erfolgen kann. Anhand dieses, beispielsweise in normierender Weise oder subtraktiv durchgeführten, Vergleichs kann ein momentaner Grad der Inhomogenitäten im Medium abgeschätzt werden und davon abgleitet auf den bei der Messung begangenen Meßfehler ausreichend genau zurück geschlossen werden. Das erfindungsgemäße In-Line-Meßgerät ist daher im besonderen zum Messen einer physikalischen Meßgröße, insb. eines Massedurchflusses, einer Dichte und/oder einer Viskosität, auch eines in einer Rohrleitung strömenden zwei- oder mehrphasigen Mediums, insb. eines Flüssigkeits-Gas-Gemisches geeignet.

Ein Vorteil der Erfindung besteht darin, dass die zu ermittelnden Korrekturwerte über einen großen Anwendungsbereich gut reproduzierbar und auch die Bildungsvorschriften zur Bestimmung der Korrekturwerte während des Messbetriebes vergleichsweise einfach formulierbar sind. Darüberhinaus sind diese Bildungsvorschriften mit einem vergleichsweise niedrigen Aufwand vorab kalibrierbar. Ein weitere Vorteil der Erfindung ist ferner auch darin zu sehen, daß beim erfindungsgemäßen In-Line-Meßgerät im Vergleich zu einem herkömmlichen, insb. einem solchen gemäß der in der WO-A 03/095950, der WO-A 03/095949 oder der US-A 45 24 610 beschriebenen Art, lediglich bei der üblicherweise digitalen Messwerterzeugung geringfügige, im wesentlichen auf die Firmware beschränkte Änderungen vorgenommen werden müssen, während sowohl beim Meßaufnehmer wie auch bei der Erzeugung und Vorverarbeitung der Schwingungsmeßsignale keine oder nur eher geringfügige Änderungen erforderlich sind. So können beispielsweise auch bei zwei- oder mehrphasigen Medien die Schwingungsmeßsignale nach wie vor mit einem üblichen Abtastverhältnis von weit unter 100:1, insb. von etwa 10:1, abgetastet werden.

Die Erfindung und weitere vorteilhafte Ausgestaltungen werden nun anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert, wird auf bereits erwähnte Bezugszeichen in nachfolgenden Figuren verzichtet.

Fig. 1 zeigt ein in eine Rohrleitung einfügbares In-Line-Meßgerät zum Messen eines Massendurchflusses eines in der Rohrleitung geführten Fluids,
Fig. 2 zeigt ein Ausführungsbeispiel für einen für das Meßgerät von Fig. 1 geeigneten Meßaufnehmer vom Vibrations-Typ in einer perspektivischen Seitenansicht,
Fig. 3 zeigt den Meßaufnehmer von Fig. 2 geschnitten in einer Seitenansicht,
Fig. 4 zeigt den Meßaufnehmer von Fig. 2 in einem ersten Querschnitt,
Fig. 5 zeigt den Meßaufnehmer von Fig. 2 in einem zweiten Querschnitt,
Fig. 6 zeigt ein weiteres Ausführungsbeispiele für einen für das In-Line-Meßgerät von Fig. 1 geeigneten Meßaufnehmer vom Vibrations-Typ geschnitten in einer Seitenansicht,
Fig. 7 zeigt schematisch nach der Art eines Blockschaltbildes eine bevorzugte Ausgestaltung einer für das In-Line-Meßgerät von Fig. 1 geeigneten Meßgerät-Elektronik, und
Fig. 8, 9 zeigen graphisch mit einem In-Line-Meßgerät gemäß den Fig. 1 bis 7 experimentell ermittelte Messdaten.

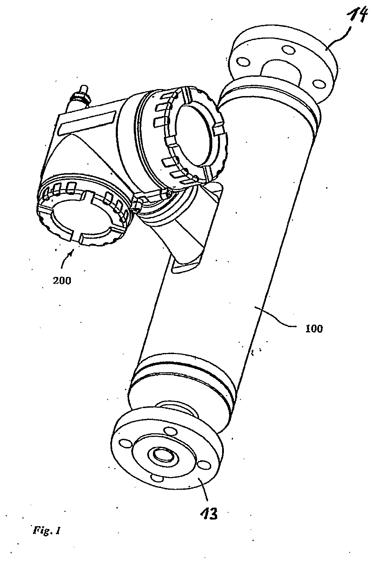

In Fig. 1 ist perspektivisch ein In-Line-Meßgerät 1 dargestellt, das dazu geeignet ist, eine physikalische Meßgröße, z.B. einen Massendurchfluß m, eine Dichte $\rho$ und/oder eine Viskosität $\eta$, eines in einer - hier aus Übersichtlichkeitsgründen nicht dargestellten - Rohrleitung strömenden Mediums zu erfassen und in einen diese Meßgröße momentan repräsentierenden Messwert Xx abzubilden. Medium kann dabei praktisch jeder strömungsfähige Stoff sein, beispielsweise eine Flüssigkeit, ein Gas, ein Dampf oder dergleichen.

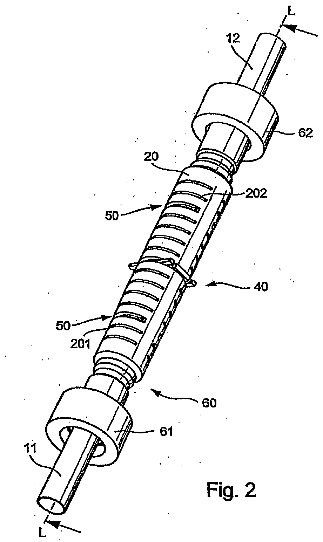

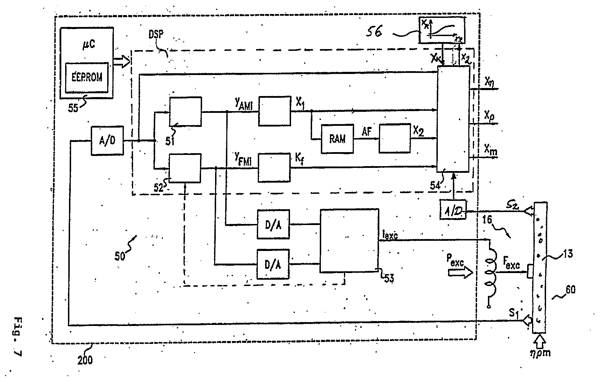

Das, beispielsweise als Coriolis-Massendurchfluß-/Dichte- und/oder Viskositätsmesser ausgebildete, In-Line-Meßgerät 1 umfaßt dafür einen im Betrieb vom zu messenden Medium durchströmten Messaufnehmer 10 vom Vibrationstyp, von dem ein Ausführungsbeispiel und Ausgestaltungen in den Fig. 2 bis 6 gezeigt sind, sowie eine, wie in Fig. 2 und 7 schematisch dargestellt, mit dem Messaufnehmer 10 elektrisch verbundene Messgerät-Elektronik 50. Vorzugsweise ist die Messgerät-Elektronik 50 ferner so ausgelegt, daß sie im Betrieb des In-Line-Meßgerät 1 mit einer diesem übergeordneten Messwertverarbeitungseinheit, beispielsweise einer speicherprogrammierbaren Steuerung (SPS), einem Personalcomputer und/oder einer Workstation, via Datenübertragungssystem, beipielsweise einem Feldbussystem, Meß- und/oder andere Betriebsdaten austauschen kann. Des weiteren ist die Messgerät-Elektronik 50 so ausgelegt, dass sie von einer externen Energieversorgung, beispielsweise auch über das vorgenannte Feldbussystem, gespeist werden kann. Für den Fall, daß das Vibrations-Meßgerät für eine Ankopplung an ein Feldbus- oder ein anderes Kommunikationssystem vorgesehen ist, weist die, insb. programmierbare, Meßgerät-Elektronik 50 eine entsprechende Kommunikations-Schnittstelle für eine Datenkommunikation auf, z.B. zum Senden der Meßdaten an die bereits erwähnte speicherprogrammierbare Steuerung oder ein übergeordnetes Prozeßleitsystem, auf. Zur Unterbringung der Messgerät-Elektronik 50 ist ferner ein, insb. von außen direkt am Messaufnehmer 10 angebrachtes oder aber von diesem abgesetztes, Elektronikgehäuse 200 vorgesehen.

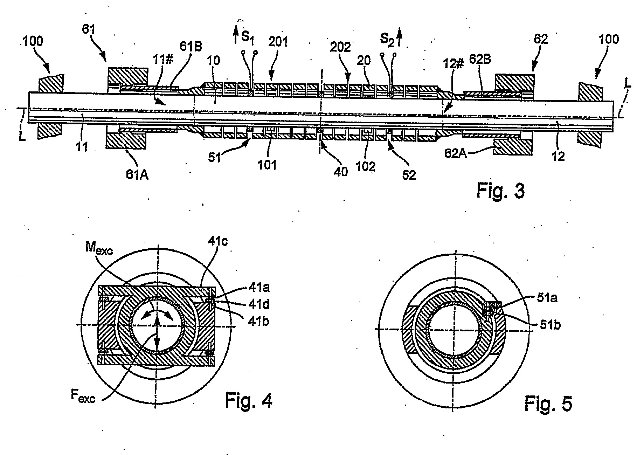

Wie bereits erwähnt, umfasst das In-Line-Meßgerät einen Meßaufnehmer vom Vibrationstyp, der im Betrieb vom zu messenden Medium durchströmt ist, und der dazu dient, in einem hindurchströmenden Medium solche mechanische Reaktionskräfte, insb. vom Massendurchfluß abhängige Corioliskräfte, von der Mediumsdichte abhängige Trägheitskräfte und/oder von der Mediumsviskosität abhängige Reibungskräfte, zu erzeugen, die meßbar, insb. sensorisch erfaßbar, auf den Meßaufnehmer zurückwirken. Abgeleitet von diesen das Medium beschreibenden Reaktionskräften können so in der dem Fachmann bekannten Weise z.B. der Massendurchfluß, die Dichte und/oder die Viskosität des Mediums gemessen werden. In den Fig. 3 und 4 ist ein Ausführungsbeispiel einer als Messaufnehmer 10 vom Vibrations-Typ gezeigt dienenden physikalisch-elektrischen Wandleranordnung schematisch dargestellt. Der mechanische Aufbau und die Funktionsweise einer derartigen Wandleranordnung ist dem Fachmann an und für sich bekannt und z.B. auch in der US-B 66 91 583, der

WO-A 03/095949 oder der WO-A 03/095950 detailliert beschrieben.

Zum Führen des Mediums und zum Erzeugen besagter Reaktionskräfte umfaßt der Meßaufnehmer wenigstens ein im wesentlichen gerades Meßrohr 10 von vorgebbarem Messrohrdurchmesser, das im Betrieb zumindest zeitweise vibrieren gelassen wird und dadurch wiederholt elastisch verformt wird. Elastisches Verformen des Messrohrlumens bedeutet hier, dass eine Raumform und/oder eine Raumlage des Messrohrlumens innerhalb eines Elastizitätsbereiches des Messrohrs 10 in vorgebbarer Weise zyklisch, insb. periodisch, verändert wird, vgl. hierzu auch die US-A 48 01 897, die

US-A 56 48 616, die US-A 57 96 011, die US-A 60 06 609, die US-B 66 91 583, die WO-A 03/095949 und/oder die WO-A 03/095950. Es sei an dieser Stelle darauf verwiesen, daß anstelle des im Ausführungsbeispiel gezeigten Messaufnehmers mit einem einzigen, geraden Meßrohr, der der Realisierung der Erfindung dienenende Meßaufnehmr gleichwohl aus einer Vielzahl von aus dem Stand der Technik bekannten Messaufnehmern vom Vibrationstyp ausgewählt werden kann. Im besonderen eigenen sich beispielsweise Meßaufnehmer vom Vibrationstyp mit zwei parallel vom zu messenden Medium durchflossenen, geraden Meßrohren, wie sie beispielsweise auch in der US-A 56 02 345 detailliert beschrieben sind.

Wie in Fig. 1 gezeigt, weist der Meßaufnehmer 1 weiters ein das Meßrohr 10 sowie allfällige weitere Komponenten des Messaufnehmers (siehe auch weiter unten) umgebendes Meßaufnehmer-Gehäuse 100 auf, das diese vor schädlichen Umgebungseinflüssen schützt und/oder der allfällige Schallemissionen des Meßaufnehmers nach außen hin dämpft. Überdies dient das Meßaufnehmer-Gehäuse 100 auch dazu ein die Meßgerät-Elektronik 50 einhausendes Elektronik-Gehäuse 200 zu haltern. Hierzu ist das Meßaufnehmer-Gehäuse 100 mit einem halsartigen Übergangsstück versehen, an dem das Elektronik-Gehäuse 200 entsprechend fixiert ist, vgl. Fig. 1. Anstelle des hier gezeigten rohrförmigen, koaxial zum Messrohr verlaufenden Wandlerghäuses 100 können selbstverständlich auch andere geeignete Gehäuseformen, wie z.B. kastenförmigen Strukturen, verwendete werden.

Das Messrohr 10, das in der üblichen Weise einlass-seitig und auslass-seitig mit der das zu messende Medium zu- bzw. abführenden Rohrleitung kommuniziert, ist in dem eher starren, insb. biege- und verwindungssteifen, Wandlerghäuse 100 schwingfähig aufgehängt. Zum Hindurchströmenlassen des Mediums ist das Meßrohr 10 über ein in ein Einlaßende 11# einmündendes Einlaßrohrstück 11 und über ein in ein Auslaßende 12# einmündendes Auslaßrohrstück 12 an die Rohrleitung angeschlossen. Meßrohr 10, Einlaß- und Auslaßrohrstück 11, 12 sind zueinander und zur oben erwähnten Meßrohrlängsachse L möglichst fluchtend ausgerichtet und in vorteilhafter Weise einstückig ausgeführt, so daß zu deren Herstellung z.B. ein einziges rohrförmiges Halbzeug dienen kann; falls erforderlich können Meßrohr 10 und Rohrstücke 11, 12 aber auch mittels einzelner, nachträglich zusammengefügter, z.B. zusammengeschweißter, Halbzeuge hergestellt werden. Zur Herstellung des Meßrohrs 10, wie auch des Einlaß- und des Auslaßrohrstücks 11, 12 kann praktisch jedes der für solche Meßaufnehmer üblichen Materialien verwendet werden, wie z.B. Eisen-, Titan-, Zirkonium- und/oder Tantal-Legierungen, Kunststoffe oder Keramiken. Für den Fall, daß der Meßaufnehmer lösbar mit der Rohrleitung zu montieren ist, ist dem Einlaßrohrstück 11 und dem Auslaßrohrstück 12 bevorzugt jeweils ein erster bzw. zweiter Flansch 13, 14 angeformt; falls erforderlich können Ein- und Auslaßrohrstück 11, 12 aber auch direkt mit der Rohrleitung, z.B. mittels Schweißen oder Hartlötung, verbunden werden. Ferner ist, wie in den Fig. 1 schematisch dargestellt, am ein Ein- und am Auslaßrohrstück 11, 12 fixiertes, das Meßrohr 10 aufnehmendes Wandlergehäuse 100 vorgesehen, vgl. hierzu Fig. 1 und 2.

Zumindest zum Messen des Massendurchflusses m wird das Messrohr 10 in einem als Lateral-Schwingungsmode ausgebildeten ersten Schwingungsnutzmode angeregt, bei dem es zumindest anteilig Schwingungen, insb. Biegeschwingungen, lateral zu einer gedachten Meßrohrlängsachse L ausführt, insb. so, daß es sich, im wesentlichen auf einer natürlichen Biege-Eigenfrequenz schwingend, gemäß einer natürlichen ersten Eigenschwingungsform lateral ausbiegt. Für den Fall, daß das Medium in der angeschlossenen Rohrleitung strömt und somit der Massendurchfluß m von Null verschieden ist, werden mittels des im ersten Schwingungsnutzmode schwingenden Meßrohrs 10 im hindurchströmenden Medium Corioliskräfte induziert. Diese wiederum wirken auf das Meßrohr 10 zurück und bewirken so in der dem Fachmann bekannten Weise eine zusätzliche, sensorisch erfaßbare Verformung des Meßrohrs 10 im wesentlichen gemäß einer natürlichen zweiten Eigenschwingungsform, die der ersten Eigenschwingungsform koplanar überlagert ist. Die momentane Ausprägung der Verformung des Meßrohrs 10 ist dabei, insb. hinsichtlich ihrer Amplituden, auch vom momentanen Massendurchfluß m abhängig. Als zweite Eigenschwingungsform, dem sogenannten Coriolismode, können z.B., wie bei derartigen Meßaufnehmern üblich, anti-symmetrische Biegeschwingungsformen mit zwei Schwingungsbäuchen oder mit vier Schwingungsbäuchen dienen. Da natürliche Eigenfrequenzen solcher Lateral-Schwingungsmoden von Meßrohren bekanntlich in besonderem Maße auch von der Dichte $\rho$ des Mediums abhängig sind, kann mittels des In-Line-Meßgerät ohne weiteres zusätzlich zum Massedurchfluß m auch die Dichte $\rho$ gemessen werden. Zusätzlich zu den Lateral-Schwingungen wird das wenigstens eine Messrohr 10 zum Erzeugen von viskositätsabhängigen Scherkräften im strömenden Medium zumindest zeitweise in einem Torsions-Schwingungsmode betrieben. In diesem Torsions-Schwingungsmode ist das Messrohr zu Torsionschwingungen um eine im wesentlichen mit der Messrohrlängsachse L parallel verlaufenden oder koinzidierenden Torsions-Schwingungsachse angeregt, und zwar so, daß es im wesentlichen gemäß einer natürlichen Torsionsschwingungsform um seine Längsachse L verdrillt wird, vgl. hierzu z.B. auch die US-A 45 24 610, die US-A 52 53 533, die

US-A 60 06 609 oder die EP-A 1 158 289. Das Anregen der Torsionschwingungen kann hierbei sowohl alternierend zum ersten Schwingungsnutzmode und getrennt von diesem in einem zweiten Schwingungsnutzmode oder aber, zumindest bei voneinander unterscheidbaren Schwingungsfrequenzen, auch simultan zu den Lateralschwingungen im ersten Schwingungsnutzmode erfolgen. Anders gesagt, der Messaufnehmer arbeitet zumindest zeitweise in einem Dual-Modebetrieb, bei dem das wenigstens eine Messrohr 10 abwechselnd und/oder alternierend in wenigstens zwei von einander im wesentlichen unabhängigen Schwingungsmoden, nämlich dem Lateral-Schwingungsmode und dem Torsions-Schwingungsmode vibrieren gelassen wird.

Nach einer Ausgestaltung der Erfindung wird das Meßrohr 10 zum Erzeugen von massedurchflussabhängigen Corioliskräften im strömenden Medium zumindest zeitweise mit einer Lateralschwingungs-Frequenz $f_{excL}$ angeregt, die möglichst genau einer niedrigsten natürlichen Biege-Eigenfrequenz des Meßrohrs 10 entspricht, so daß also das lateral schwingende, jedoch nicht vom Fluid durchströmte Meßrohr 10 bezüglich einer zur Meßrohrlängsachse L senkrechten Mittelachse im wesentlichen symmetrisch ausgebogen wird und dabei einen einzigen Schwingungsbauch aufweist. Diese niedrigste Biege-Eigenfrequenz kann beispielsweise bei einem als Meßrohr 10 dienenden Edelstahlrohr mit einer Nennweite von 20 mm, einer Wandstärke von etwa 1,2 mm und einer Länge von etwa 350 mm sowie den üblichen Anbauten bei etwa 850 Hz bis 900 Hz liegen.

Nach einer weiteren Ausgestaltung der Erfindung wird das Meßrohr 10, insb. simultan zu den Lateralschwingungen im Nutzmode, mit einer Torsionsschwingungs-Frequenz $f_{excT}$, die möglichst genau einer natürlichen Torsions-Eigenfrequenz des Meßrohrs 10 entspricht, angeregt. Eine niedrigste Torsions-Eigenfrequenz kann beispielsweise bei einem geraden Meßrohr etwa im Bereich des Doppelten der niedrigsten Biege-Eigenfrequenz liegen.

Wie bereits erwähnt, werden die Schwingungen des Messrohrs 11 einerseits durch Abgabe von Schwingungsenergie, insb. an das Medium, bedämpft. Anderseits aber kann dem vibrierenden Meßrohr 10 auch dadurch in erheblichem Maße Schwingungsenergie entzogen werden, daß mit diesem mechanisch gekoppelte Bauteile, wie z.B. das Wandlergehäuse 100 oder die angeschlossene Rohrleitung, ebenfalls zu Schwingungen angeregt werden. Zum Zwecke der Unterdrückung oder Vermeidung einer allfälligen Abgabe von Schwingungsenergie an die Umgebung ist daher im Meßaufnehmer ferner ein einlaßseitig und auslaßseitig am Meßrohr 10 fixierter Gegenschwinger 20 vorgesehen. Der Gegenschwinger 20 ist, wie in den Fig. 2 schematisch dargestellt, bevorzugt einstückig ausgeführt. Falls erforderlich, kann der Gegenschwinger 20 auch, wie z.B. auch in der

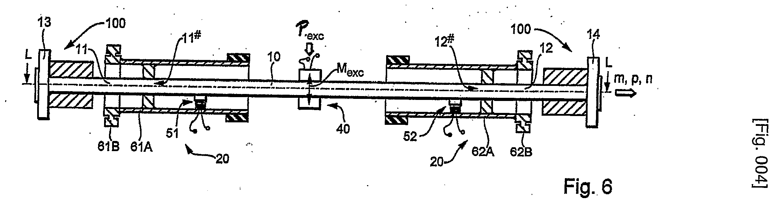

US-A 59 69 265, der EP-A 317 340 oder der WO-A 00/14485 gezeigt, mehrteilig zusammengesetzt oder mittels zweier separater, einlaß- bzw. auslaßseitig am Meßrohr 10 fixierter Teil-Gegenschwinger realisiert sein, vgl. Fig. 6. Der Gegenschwinger 20 dient u.a. dazu, den Meßaufnehmer für wenigstens einen vorherbestimmten, z.B. einen im Betrieb des Meßaufnehmers am häufigsten zu erwartenden oder auch kritischen Mediumsdichtewert soweit dynamisch auszubalancieren, daß im vibrierenden Meßrohr 10 allfällig erzeugte Querkräfte und/oder Biegemomente weitgehend kompensiert werden, vgl. die hierzu auch die US-B 66 91 583. Darüberhinaus dient der Gegenschwinger 20 für den oben beschriebenen Fall, daß das Meßrohr 10 im Betrieb auch zu Torsionsschwingungen angeregt wird, außerdem dazu, solche Torsions-Momente, die vom vorzugsweise um seine Längsachse L tordierenden einzigen Meßrohr 10 erzeugt werden, weitgehend kompensierende Gegen-Torsionsmomente zu erzeugen und somit die Umgebung des Meßaufnehmers, insb. aber die angeschlossene Rohrleitung, weitgehend frei von dynamischen Torsionsmomenten zu halten. Der Gegenschwinger 20 kann, wie in den Fig. 2 und 3 schematisch dargestellt, rohrförmig ausgeführt und beispielsweise so am Einlaßende 11# und am Auslaßende 12# mit dem Meßrohr 10 verbunden sein, daß er, wie in Fig. 3 gezeigt, im wesentlichen koaxial zum Meßrohr 10 ausgerichtet ist. Als Material für den Gegenschwinger 20 kommen praktisch dieselben Materialien in Frage, wie sie auch für das Meßrohr 10 verwendbar sind, also beispielsweise Edelstahl, Titan-Legierungen etc.

Der, insb. im Vergleich zum Meßrohr 10 etwas weniger torsions-und/oder biege-elastische, Gegenschwinger 20 wird im Betrieb gleichfalls schwingen gelassen, und zwar im wesentlichen gleichfrequent, jedoch außerphasig, insb. gegenphasig, zum Meßrohr 10. Dementsprechend ist der Gegenschwinger 20 mit wenigstens einer seiner Torsisons-Eigenfrequenzen möglichst genau auf jene Torsions-Schwingungsfrequenzen abgestimmt, mit der dieses im Betrieb vorwiegend schwingen gelassen wird. Darüber hinaus ist der Gegenschwinger 20 auch in wenigstens einer seiner Biege-Eigenfrequenz zu wenigstens einer Biege-Schwingungsfrequenz mit der das Messrohr 10, insb. im Nutzmode, schwingen gelassen wird möglichst gleich eingestellt und wird der Gegenschwinger 20 im Betrieb des Meßaufnehmers auch zu Lateralschwingungen, insb. Biegeschwingungen, angeregt, die im wesentlichen koplanar zu Lateralschwingungen des Meßrohrs 10, insb. den Biegeschwingungen des Nutzmodes, ausgebildet sind.

Nach einer Ausgestaltung der Erfindung sind dafür, wie in Fig. 3 schematisch dargestellt, im Gegenschwinger 20 eingearbeitete Nuten 201, 202 vorgesehen, die eine genaues Einstellen von dessen Torsions-Eigenfrequenzen, insb. ein Absenken der Torsions-Eigenfrequenzen durch Absenken einer Torsions-Steifigkeit des Gegenschwingers 20, auf einfache Weise ermöglichen. Obwohl die Nuten 201, 202 in der Fig. 2 oder 3 in Richtung der Längsachse L im wesentlichen gleichverteilt gezeigt sind, können sie, falls erforderlich, ohne weiteres auch in Richtung der Längsachse L ungleich verteilt angeordnet sein. Darüber hinaus kann die Massenverteilung des Gegenschwingers, wie ebenfalls in Fig. 3 schematisch dargestellt, auch mittels entsprechender Massenausgleichskörper 101, 102 korrigiert werden, die am Meßrohr 10 fixiert sind. Als Massenausgleichskörper 101, 102 können z.B. auf das Meßrohr 10 aufgeschobene Metallringe oder an diesem fixierte Metallplättchen dienen.

Zum Erzeugen mechanischer Schwingungen des Meßrohrs 10 umfaßt der Meßaufnehmer ferner eine, insb. elektrodynamische, Erregeranordnung 40, die mit dem Messrohr gekoppelt ist. Die Erregeranordnung 40 dient dazu, eine von der Meßgerät-Elektronik eingespeiste, elektrische Erregerleistung $P_{exc}$, z.B. mit einem geregelten Erregerstrom $i_{exc}$ und/oder einer geregelten Spannung, in ein auf das Meßrohr 10, z.B. pulsförmig oder harmonisch, einwirkendes und dieses elastisch verformendes Erregermoment Mexe und/oder in eine lateral auf das Messrohr 10 wirkende Erregerkraft $F_{exc}$ umzuwandeln. Zur Erzielung eines möglichst hohen Wirkungsgrades und eines möglichs hohen Signal/Rausch-Verhältnisses ist die Erregerleistung $P_{exc}$ möglichst genau so eingestellt, dass überwiegend die Schwingungen des Messrohrs 10 im Nutzmode aufrecht erhalten werden, und zwar möglichst genau auf einer momentanen Eigenfrequenz des vom Medium durchströmten Meßrohrs. Die Erregerkraft Fexe wie auch das Erregermoment $M_{exc}$ können dabei, wie in den Fig. 4 oder 6 schematisch dargestellt, jeweils bidirektional oder aber auch unidirektional ausgebildet sein und in der dem Fachmann bekannten Weise z.B. mittels einer Strom-und/oder Spannungs-Regelschaltung, hinsichtlich ihrer Amplitude und, z.B. mittels einer Phasen-Regelschleife, hinsichtlich ihrer Frequenz eingestellt werden. Als Erregeranordnung 40 kann, wie bei solchen Meßaufnehmern vom Vibrationstyp üblich, beispielsweise eine Tauchspulenanordnung mit einer am Gegenschwinger 20 oder von innen am Wandlergehäuse 100 befestigten zylindrischen Erregerspule, die im Betrieb von einem entsprechenden Erregerstrom $i_{exc}$ durchflossen ist, und mit einem in die Erregerspule zumindest teilweise eintauchenden dauermagnetischen Anker, der am Meßrohr 10 fixiert ist, dienen. Ferner kann die Erregeranordnung 40 auch, wie z.B. in der US-A 45 24 610 oder der WO-A 03/095950 gezeigt, mittels mehrer Tauchspulen oder auch mittels Elektromagneten realisiert sein.

Zum Detektieren der Schwingungen des Messrohrs 10 umfasst der Messaufnehmer ferner eine Sensoranordnung 50, die mittels wenigstens eines auf Vibrationen des Messrohrs 10 reagierenden ersten Schwingungsensors 51 ein diese repräsentierendes erstes, insb. analoges, Schwingungsmeß-Signal $s_1$ erzeugt. Der Schwingungsensor 51 kann z.B. mittels eines dauermagnetischen Ankers gebildet sein, der am Messrohr 10 fixiert ist und mit einer vom Gegenschwinger 20 oder vom Wandlerghäuse gehalterten Sensorspule in Wechselwirkung steht. Als Schwingungsensor 51 sind besonders solche Sensoren geeignet, die, basierend auf dem elektrodynamischen Prinzip, eine Geschwindigkeit der Auslenkungen des Messrohrs 10 erfassen. Es können aber auch beschleunigungsmessende elektrodynamische oder aber auch wegmessende resistive oder optische Sensoren verwendet werden. Selbstverständlich können auch andere dem Fachmann bekannte und für die Detektion solcher Vibrationen geeignete Sensoren verwendet werden. Die Sensoranordnung 60 umfasst ferner einen, insb. zum ersten Schwingungsensor 51 identischen, zweiten Schwingungsensor 52, mittels dem sie ein ebenfalls Vibrationen des Messrohrs 10 repräsentierendes zweites Schwingungsmeß-Signal $s_2$ liefert. Die beiden Schwingungsensor 51, 52 sind bei dieser Ausgestaltung entlang des Messrohrs 10 voneinander beabstandet, insb. in einem gleichen Abstand von der Mitte des Messrohrs 10, so im Messaufnehmer 10 angeordnet, dass mittels der Sensoranordnung 50 sowohl einlass-seitige als auch auslass-seitige Vibrationen des Messrohrs 10 örtlich erfasst und in die entsprechenden Schwingungsmeß-Signale $s_1$ bzw. $s_2$ umgewandelt werden. Beide Schwingungsmeß-Signale $s_1$, $s_2$, die üblicherweise jeweils eine einer momentanen Schwingfrequenz des Messrohrs 10 entsprechende Signalfrequenz aufweisen, sind, wie in Fig. 2 gezeigt, der Messgerät-Elektronik 50 zugeführt, wo sie in der dem Fachmann bekannten Weise mittels einer entsprechenden vorverarbeitet, insb. digitalisiert, und anschließen geeignet ausgewertet werden.

Nach einer Ausgestaltung der Erfindung ist die Erregeranordnung 40, wie auch in Fig. 2 und 3 gezeigt, so ausgebildet und im Meßaufnehmer angeordnet, daß sie im Betrieb gleichzeitig, insb. differentiell, auf Meßrohr 10 und Gegenschwinger 20 wirkt. Bei dieser Weiterbildung der Erfindung ist die Erregeranordnung 40, wie auch in Fig. 2 gezeigt, in vorteilhafter Weise so ausgebildet und so im Meßaufnehmer angeordnet, daß sie im Betrieb gleichzeitig, insb. differentiell, auf Meßrohr 10 und Gegenschwinger 20 wirkt. Im in der Fig. 4 gezeigten Ausführungsbeispiel weist die Erregeranordnung 40 dazu wenigstens eine im Betrieb zumindest zeitweise vom Erregerstrom oder einem Erregerteilstrom durchflossene erste Erregerspule 41a auf, die an einem mit dem Meßrohr 10 verbundenen Hebel 41c fixiert ist und über diesen und einen von außen am Gegenschwinger 20 fixierten Anker 41b differentiell auf das Meßrohr 10 und den Gegenschwinger 20 einwirkt. Diese Anordnung hat u.a. auch den Vorteil, daß einerseits der Gegenschwinger 20 und somit auch das Wandlergehäuse 100 im Querschnitt klein gehalten und trotzdem die Erregerspule 41a, insb. auch bei der Montage, leicht zugänglich ist. Darüber hinaus besteht eine weiterer Vorteil dieser Ausgestaltung der Erregeranordnung 40 auch darin, daß allfällig verwendete, insb. bei Nennweiten von über 80 mm nicht mehr vernachlässigbar schwere, Spulenbecher 41d ebenfalls am Gegenschwinger 20 fixierbar sind und somit praktisch keinen Einfluß auf die Eigenfrequenzen des Meßrohrs 10 haben. Es sei jedoch an dieser Stelle darauf hingewiesen, daß falls erforderlich, die Erregerspule 41a auch vom Gegenschwinger 20 und dementsprechend der Anker 41b vom Meßrohr 10 gehaltert werden können.

In entsprechender Weise können auch die Schwingungssensoren 51, 52 so ausgelegt und im Meßaufnehmer angeordnet sein, daß durch sie die Vibrationen von Meßrohr 10 und Gegenschwinger 20 differentiell erfaßt werden. Im in der Fig. 5 gezeigten Ausführungsbeispiel umfaßt die Sensoranordnung 50 eine am Meßrohr 10 fixierte, hier außerhalb sämtlicher Trägheitshauptachsen der Sensoranordnung 50 angeordnete, Sensorspule 51a. Die Sensorspule 51a ist möglichst nah zu einem am Gegenschwinger 20 fixierten Anker 51b angeordnet und mit diesem magnetisch so gekoppelt, daß in der Sensorspule eine durch rotatorische und/oder laterale, ihre relative Lage und/oder ihren relativen Abstand verändernde Relativbewegungen zwischen Meßrohr 10 und Gegenschwinger 20 beinflußte, veränderliche Meßspannung induziert wird. Aufgrund einer solchen Anordnung der Sensorspule 51a können in vorteilhafter Weise gleichzeitig sowohl die oben genannten Torsionsschwingungen als auch die angeregten Biegeschwingungen erfaßt werden. Falls erforderlich können die Sensorspule 51a dazu aber auch am Gegenschwinger 20 und in entsprechender Weise der mit dieser gekoppelte Anker 51b am Meßrohr 10 fixiert sein.

Nach einer anderen Ausgestaltung der Erfindung sind Meßrohr 10, Gegenschwinger 20 sowie die daran befestigten Sensor- und Erregeranordnungen 40, 50 hinsichtlich ihrer Massenverteilung so aufeinander abgestimmt, daß das so gebildete, mittels des Ein- und am Auslaßrohrstücks 11, 12 aufgehängte Innenteil des Meßaufnehmers einen Massenschwerpunkt MS aufweist, der zumindest innerhalb des Meßrohrs 10, vorzugsweise aber möglichst nah an der Meßrohrlängsachse L liegt. Zudem ist das Innenteil in vorteilhafter Weise so ausgebildet, daß es eine mit dem Einlaßrohrstück 11 und dem Auslaßrohrstück 12 fluchtende und zumindest abschnittsweise innerhalb des Meßrohrs 10 liegende erste Trägheitshauptachse $T_1$ aufweist. Aufgrund der Verlegung des Massenschwerpunktes MS des Innenteils, insb. aber auch aufgrund der vorbeschriebenen Lage der ersten Trägheitshauptachse $T_1$ sind die beiden betriebsgemäß vom Meßrohr 10 eingenommenen und vom Gegenschwinger 20 weitgehend kompensierten Schwingungsformen, nämlich die Torsionsschwingungen und die Biegeschwingungen des Meßrohrs 10, mechanisch voneinander weitestgehend entkoppelt, vgl. hierzu auch die WO-A 03/095950. Dadurch können beide Schwingungsformen, also Lateralschwingungen und/oder Torsionsschwingungen, in vorteilhafter Weise ohne weiteres voneinander getrennt angeregt werden. Sowohl die Verlegung des Massenschwerpunkts MS als auch der ersten Trägheitshauptachse $T_1$ hin zur Meßrohrlängsachse L kann beispielsweise dadurch erheblich vereinfacht werden, daß das Innenteil, also Meßrohr 10, Gegenschwinger 20 sowie die daran befestigten Sensor- und Erregeranordnungen 50, 40, so ausgebildet und zueinander angeordnet sind, daß eine Massenverteilung des Innenteils entlang der Meßrohrlängsachse L im wesentlichen symmetrisch, zumindest aber invariant gegenüber einer gedachten Drehung um die Meßrohrlängsachse L um 180° (c2-Symmetrie), ist. Zu dem ist der - hier rohrförmig, insb. auch weitgehend axial-symmetrisch, ausgebildete - Gegenschwinger 20 im wesentlich koaxial zum Meßrohr 10 angeordnet, wodurch das Erreichen einer symmetrische Massenverteilung des Innenteils erheblich vereinfacht wird und somit auch der Massenschwerpunkt MS in einfacher Weise nah zur Meßrohrlängsachse L hin verlegt wird. Darüber hinaus sind auch die Sensor- und Erregeranordnungen 50, 40 im Ausführungbeispiel so ausgebildet und zueinander am Meßrohr 10 und ggf. am Gegenschwinger 20 angeordnet, daß ein durch sie erzeugtes Massenträgheitsmoment möglichst konzentrisch zur Meßrohrlängsachse L ausgebildet oder zumindest möglichst klein gehalten ist. Dies kann z.B. dadurch erreicht werden, daß ein gemeinsamer Massenschwerpunkt von Sensor- und Erregeranordnung 50, 40 ebenfalls möglichst nah an der Meßrohrlängsachse L liegt und/oder daß eine Gesamtmasse von Sensor- und Erregeranordnung 50, 40 möglichst klein gehalten ist.

Nach einer weiteren Ausgestaltung der Erfindung ist die Erregeranordnung 40 zum Zwecke der getrennten Anregung von Torsions- und/oder Biegeschwingungen des Meßrohrs 10 so ausgebildet und an diesem und am Gegenschwinger 20 so fixiert, daß eine die Biegeschwingungen erzeugende Kraft entlang einer gedachten Kraftlinie auf das Meßrohr 10 wirkt, die außerhalb einer zur ersten Trägheitshauptachse $T_1$ senkrechten zweiten Trägheitshauptachse $T_2$ verläuft oder letztere in höchstens einem Punkt schneidet. Vorzugsweise ist das Innenteil so ausgestaltet, daß die zweite Trägheitshauptachse $T_2$ im wesentlichen mit der oben erwähnten Mittelachse übereinstimmt. Im in der Fig. 4 gezeigten Ausführungsbeispiel weist die Erregeranordnung 40 dazu wenigstens eine im Betrieb zumindest zeitweise vom Erregerstrom oder einem Erregerteilstrom durchflossene erste Erregerspule 41a auf, die an einem mit dem Meßrohr 10 verbundenen Hebel 41c fixiert ist und über diesen und einen von außen am Gegenschwinger 20 fixierten Anker 41b differentiell auf das Meßrohr 10 und den Gegenschwinger 20 einwirkt. Diese Anordnung hat u.a. auch den Vorteil, daß einerseits der Gegenschwinger 20 und somit auch das Wandlergehäuse 100 im Querschnitt klein gehalten und trotzdem die Erregerspule 41a, insb. auch bei der Montage, leicht zugänglich ist. Darüber hinaus besteht eine weiterer Vorteil dieser Ausgestaltung der Erregeranordnung 40 auch darin, daß allfällig verwendete, insb. bei Nennweiten von über 80 mm nicht mehr vernachlässigbar schwere, Spulenbecher 41d ebenfalls am Gegenschwinger 20 zu fixieren sind und somit praktisch keinen Einfluß auf die Resonanzfrequenzen des Meßrohrs 10 haben. Es sei jedoch an dieser Stelle darauf hingewiesen, daß falls erforderlich, die Erregerspule 41a auch vom Gegenschwinger 20 und dementsprechend der Anker 41b vom Meßrohr 10 gehaltert werden können.

Nach einer weiteren Ausgestaltung der Erfindung weist die Erregeranordnung 40 wenigstens eine entlang eines Durchmessers des Meßrohrs 10 angeordnete zweite Erregerspule 42a auf die in gleicher Weise wie die Erregerspule 41a mit dem Meßrohr 10 und dem Gegenschwinger 20 gekoppelt ist. Nach einer anderen bevorzugten Ausgestaltung der Erfindung weist die Erregeranordnung zwei weitere, insgesamt also vier zumindest bezüglich der zweiten Trägheitshauptachse $T_2$ symmetrisch angeordnete Erregerspulen 43a, 44a auf, die alle in der vorgenannten Weise im Meßaufnehmer montiert sind. Die außerhalb der zweiten Trägheitshauptachse $T_2$ auf das Meßrohr 10 einwirkende Kraft kann mittels solcher Zwei- oder Vier-Spulen-Anordnungen in einfacher Weise z.B. dadurch erzeugt werden, daß eine der Erregerspulen, z.B. die Erregerspule 41a, eine andere Induktivität aufweist als die jeweils anderen oder daß eine der Erregerspulen, z.B. die Erregerspule 41a, im Betrieb von einem Erregerteilstrom durchflossen ist, der von einem jeweiligen Erregerteilstrom der jeweils anderen Erregerspulen verschieden ist.

Nach einer anderen Ausgestaltung der Erfindung umfaßt die Sensoranordnung 50, wie in Fig. 5 schematisch dargestellt, eine außerhalb der zweiten Trägheitshauptachse $T_2$ angeordnete, am Meßrohr 10 fixierte Sensorspule 51a. Die Sensorspule 51a ist möglichst nah zu einem am Gegenschwinger 20 fixierten Anker 51b angeordnet und mit diesem magnetisch so gekoppelt, daß in der Sensorspule eine durch rotatorische und/oder laterale, ihre relative Lage und/oder ihren relativen Abstand verändernde Relativbewegungen zwischen Meßrohr 10 und Gegenschwinger 20 beinflußte, veränderliche Meßspannung induziert wird. Aufgrund der erfindungsgemäßen Anordnung der Sensorspule 51a können in vorteilhafter Weise gleichzeitig sowohl die oben genannten Torsionsschwingungen als auch die ggf. angeregten Biegeschwingungen erfaßt werden. Falls erforderlich können die Sensorspule 51a dazu aber auch am Gegenschwinger 20 und in entsprechender Weise der mit dieser gekoppelte Anker 51b am Meßrohr 10 fixiert sein.

Es sei an dieser Stelle ferner erwähnt, daß die Erregeranordnung 40 und die Sensoranordnung 50 in der dem Fachmann bekannten Weise in ihrem mechanischen Aufbau auch im wesentlich gleich ausgeführt sein können; somit lassen sich die vorgenannten Ausgestaltungen des mechanischen Aufbaus der Erregeranordnung 40 im wesentlichen auch auf den mechanischen Aufbau der Sensoranordnung 50 übertragen und umgekehrt.

Zum Vibrierenlassen des Messrohrs 10 wird die Erregeranordnung 40, wie bereits erwähnt, mittels eines gleichfalls, insb. mehrfrequent, oszillierenden Erregerstroms $i_{exc}$ von einstellbarer Amplitude und von einstellbarer Erregerfrequenz $f_{exc}$ derart gespeist, dass die Erregerspulen 26, 36 im Betrieb von diesem durchflossen sind und in entsprechender Weise die zum Bewegen der Anker 27, 37 erforderlichen Magnetfelder erzeugt werden. Der Erregerstrom $i_{exc}$ kann z.B. harmonisch, mehrfrequent oder auch rechteckförmig sein. Die Lateralschwingungs-Erregerfrequenz $f_{excL}$ eines zum Aufrechterhalten der Lateralschwingungen des Meßrohrs 10 erforderlichen Lateral-Stromanteils $i_{excL}$ vom Erregerstrom $i_{exc}$ kann beim im Ausführungsbeispiel gezeigten Meßaufnehmer in vorteilhafter Weise so gewählt und eingestellt sein, daß das lateral schwingende Messrohr 10 im wesentlichen in einem Biegeschwingungsgrundmode mit einem einzigen Schwingungsbauch oszilliert. Analog dazu ist auch eine Torsionsschwingungs-Erregerfrequenz $f_{excT}$ eines zum Aufrechterhalten der Torsionsschwingungen des Meßrohrs 10 erforderlichen Torsions-Stromanteils $i_{excT}$ vom Erregerstrom $i_{exc}$ in vorteilhafter Weise so gewählt und eingestellt, daß das torsional schwingende Messrohr 10 möglichst in seinem Torsionsschwingungs-Grundmode mit einem einzigen Schwingungsbauch oszilliert. Die beiden vorgenannten Stromanteile $i_{excL}$ und $i_{excT}$ können je nach gewählter Betriebsart beispielsweise intermittierend, also momentan jeweils als Erregerstrom $i_{exc}$ wirkend, oder auch simultan, also einander zum Errgerstrom $i_{exc}$ ergänzend, in die Errgeranordnung 40 eingespeist werden.

Für den oben beschriebenen Fall, daß die Lateralschwingungs-Frequenz $f_{excL}$ und die Torsionsschwingungs-Frequenz $f_{excT}$, mit der das Messrohr im Betrieb schwingen gelassen wird, voneinander verschieden eingestellt sind, kann mittels des Messaufnehmers in einfacher und vorteilhafter Weise auch bei simultan angeregten Torsions- und Biegeschwingungen, z.B. basierend auf einer Signalfilterung oder einer Frequenzanalyse, eine Separierung der einzelnen Schwingungsmoden sowohl in den Erreger- als auch in den Sensorsignalen erfolgen. Anderenfalls empfiehlt sich eine alternierende Anregung der Lateral- bzw. der Torsionsschwingungen.

Zum Erzeugen und Einstellen des Erregerstroms $i_{exc}$ bzw. der Stromanteile $i_{excL}$, $i_{excT}$ umfaßt die Meßgerät-Elektronik 50 eine entsprechende Treiberschaltung 53, die von einem die einzustellende Lateralschwingungs-Erregerfrequenz $f_{excL}$ repräsentierenden Lateralschwingungs-Frequenzstellsignal $y_{FML}$ und von einem die einzustellende Lateralschwingungs-Amplitude des Erregerstroms $i_{exc}$ und/oder des Lateral-Stromanteils $i_{excL}$ repräsentierenden Lateralschwingungs-Amplitudenstellsignal $y_{AML}$ sowie zumindest zeitweise von einem von einem die einzustellende Torsionsschwingungs-Erregerfrequenz $f_{excT}$ repräsentierenden Torsionsschwingungs-Frequenzstellsignal $y_{FMT}$ und von einem die einzustellende Torsionsschwingungs-Amplitude des Erregerstroms $i_{exc}$ und/oder des Torsions-Stromanteils $i_{excT}$ repräsentierenden Torsionsschwingungs-Amplitudenstellsignal $y_{AMT}$ gesteuert ist. Die Treiberschaltung 53 kann z.B. mittels eines spannungsgesteuerten Oszillators und eines nachgeschalteten Spannungs-zu-Stromwandler realisiert sein; anstelle eines analogen Oszillators kann aber z.B. auch ein numerisch gesteuerter digitaler Oszillator zum Einstellen des momentanen Erregerstroms $i_{exc}$ oder der Anteile $i_{excL}$, $i_{excT}$ des Erregerstroms verwendet werden.

Zum Erzeugen des Lateralschwingungs-Amplitudenstellsignals $y_{AML}$ und/oder Torsionsschwingungs-Amplitudenstellsignals $y_{AMT}$ des kann z.B. eine in die Meßgerät-Elektronik 50 integrierte Amplitudenregelschaltung 51 dienen, die anhand momentaner Amplituden wenigstens eines der beiden Schwingunsmeßsignale $s_1$, $s_2$, gemessen bei der momentanen Lateralschwingungsfrequenz und/oder der momentanen Torsionsschwingungsfrequenz, sowie anhand entsprechender, konstanter oder variabler Amplitudenreferenzwerte für die Lateral- bzw. die Torsionsschwingungen $W_B$, $W_T$ die Amplitudenstellsignale $y_{AML}$, $y_{AMT}$ aktualisiert; ggf. können auch momentane Amplituden des Erregerstroms $i_{exc}$ zur Generierung des Lateralschwingungs-Amplitudenstellsignals $y_{AML}$ und/oder des Torsionsschwingungs-Amplitudenstellsignals $y_{AMT}$ hinzugezogen werden, vgl. Fig. 7. Aufbau und Wirkungsweise derartiger Amplitudenregelschaltungen sind dem Fachmann ebenfalls bekannt. Als ein Beispiel für eine solche Amplitudenregelschaltung sei außerdem auf Messumformer der Serie "PROMASS 80" verwiesen, wie sie von der Anmelderin beispielsweise in Verbindung mit Messaufnehmern der Serie " PROMASS I" angeboten werden. Deren Amplitudenregelschaltung ist bevorzugt so ausgeführt, daß die lateralen Schwingungen des Meßrohrs 10 auf eine konstante, also auch von der Dichte, p, unabhängige, Amplitude geregelt werden.

Die Frequenzregelschaltung 52 und die Treiberschaltung 53 können z.B. als Phasen-Regelschleife ausgebildet sein, die in der dem Fachmann bekannten Weise dazu verwendet wird, anhand einer Phasendifferenz, gemessen zwischen wenigstens einem der Schwinungsmeßsignale $s_1$, $s_2$ und dem einzustellenden bzw. dem momentan gemessenen Erregerstrom $i_{exc}$, das Lateralschwingungs-Frequenzstellsignal $y_{FML}$ und/oder das Torsionsschwinguns-Frequenzstellsignal $y_{FMT}$ ständig auf die momentanen Eigenfrequenzen des Meßrohrs 10 abzugleichen. Der Aufbau und die Verwendung solcher Phasenregel-Schleifen zum Betreiben von Meßrohren auf einer ihrer mechanischen Eigenfrequenzen ist z.B. in der

US-A 48 01 897 ausführlich beschrieben. Selbstverständlich können auch andere, dem Fachmann bekannte Frequenzregelschaltungen verwendet werden, wie z.B. auch in der US-A 45 24 610 oder der US-A 48 01 897 vorgeschlagen sind. Ferner sei hinsichtlich einer Verwendung solcher Frequenzregelschaltungen für Meßaufnehmer vom Vibrationstyp auf die bereits erwähnten Meßumfomer der Serie "PROMASS 80" verwiesen. Weitere als Treiberschaltung geeignete Schaltungen können beispielsweise auch der US-A 58 69 770 oder auch der US-A 65 05 519 entnommen werden.

Nach einer weiteren Ausgestaltung der Erfindung sind die Amplitudenregelschaltung 51 und die Frequenzregelschaltung 52, wie in

Fig. 7 schematisch dargestellt, mittels eines in der Meßgerät-Elektronik 50 vorgesehenen digitalen Signalprozessors DSP und mittels in diesen entsprechend implementierter und darin ablaufender Programm-Codes realisiert. Die Programm-Codes können z.B. in einem nicht-flüchtigen Speicher EEPROM eines den Signalprozessor steuernden und/oder überwachenden Mikrocomputers 55 persistent oder aber auch permanent gespeichert sein und beim Starten des Signalprozessors DSP in einen, z.B. im Signalprozessors DSP integrierten, flüchtigen Datenspeicher RAM der Meßgerät-Elektronik 50 geladen werden. Für derartige Anwendungen geeignete Signalprozessoren sind z.B. solche vom Typ TMS320VC33, wie sie von der Firma Texas Instruments Inc. am Markt angeboten werden. Es versteht sich dabei praktisch von selbst, daß die Schwingungsmeßsignale $s_1$, $s_2$ für eine Verarbeitung im Signalprozessor DSP mittels entsprechender Analog-zu-digital-Wandler A/D in entsprechende Digitalsignale umzuwandeln sind, vgl. hierzu insb. die EP-A 866 319. Falls erforderlich, sind vom Signalprozessor ausgegebene Stellsignale, wie z.B. die Amplitudenstellsignale $y_{AML}$, $y_{AMT}$ oder die Frequenzstellsignale $y_{FML}$, $y_{FMT}$ ggf. in entsprechender Weise digital-zu-analog zu wandeln.

Wie in Fig. 7 dargestellt, sind die, ggf. vorab geeignet konditionierten, Schwingunsmeßsignale $s_1$, $s_2$ ferner einer Meßschaltung 21 der Meßgerät-Elektronik zugeführt, die dazu dient anhand wenigstens eines der Schwingunsmeßsignale $s_1$, $s_2$ und/oder anhand des Errerstroms $i_{exc}$ den wenigstens einen Messwert Xx zu erzeugen.

Gemäß einer Ausgestaltung der Erfindung ist die Meßschaltung 21 zumindest anteilig als Durchflussrechner ausgebildet und dient die Meßschaltung dazu, in der dem Fachmann an und für sich bekannten Weise anhand einer zwischen den bei zumindest anteilig lateralschwingendem Messrohr 10 generierten Schwingungsmeßsignalen $s_1$, $s_2$ detektierten Phasendifferenz einen hier als Massendurchfluß-Meßwert dienenden Messwert $X_x$ zu ermitteln, der den zu messenden Massenduchfluß möglichst genau repräsentiert. Als Meßschaltung 21 können hierbei in herkömmlichen Coriolis-Massedurchfluß-Meßgeräten bereits eingesetzte, insb. digitale, Meßschaltungen dienen, die den Massendurchfluß anhand der Schwingungsmeßsignale $s_1$, $s_2$ ermitteln, vgl. hierzu insb. die eingangs erwähnte WO-A 02/37063, WO-A 99/39164, die US-A 56 48 616, die

US-A 50 69 074. Selbstverständlich können auch andere dem Fachmann bekannte, für Coriolis-Massedurchfluß-Meßgeräte geeignete Meßschaltungen verwendet werden, die Phasen- und/oder Zeitdifferenzen zwischen Schwingunsmeßsignalen der beschrienen Art messen und entsprechend auswerten.

Des weiteren kann die Meßschaltung 21 auch dazu dienen, abgleitet von einer, beispielsweise anhand wenigstens eines der Schwingungsmeßsignale $s_1$, $s_2$, gemessenen Schwingungsfrequenz des wenigstens einen Messrohrs 11 einen als Dichte-Meßwert verwendbaren Meßwert $X_x$ zu generieren, der eine zu messende Dichte p des Mediums oder einer Mediumsphase momentan repräsentiert.

Infolge dessen, daß das gerade Messrohr 10, wie oben beschrieben, betriebsgemäß, simultan oder alternierend, lateral- und torsional schwingen gelassen wird, kann die Meßschaltung 21 ferner auch dazu verwendet werden, abgleitet vom Erregerstrom $i_{exc}$, der bekanntlich auch als ein Maß für eine scheinbare Viskosität oder auch ein Viskositäts-Dichte-Produkt des im Messrohr 11 geführten Mediums dienen kann, einen als Viskositäts-Meßwert verwendbaren Meßwert $X_x$ zu ermitteln, der eine Viskosität des Mediums momentan repräsentiert, vgl. hierzu auch die US-A 45 24 610 oder die WO-A 95 16 897.

Es ist für den Fachmann dabei ohne weiteres klar, daß das In-Line-Meßgerät die einzelnen Messwerte $X_x$ für die verschiendenen Meßgrößen x sowohl jeweils in einem gemeinsamem Messzyklus, also mit einer gleichen Aktualisierungrate, als auch mit unterschiedlichen Aktualisierungsraten ermitteln kann. Beispielsweise erfordert eine hochgenaue Messung des zumeist erheblich variierenden Massedurchflusses üblicherweise eine sehr hohe Aktualisierungsrate, während die im Vergleich dazu über einen längeren Zeitraum zumeist eher wenig veränderliche Viskosität des Mediums ggf. in größeren Zeitabständen aktualisiert werden kann. Des weiteren kann ohne weiteres vorausgesetzt werden, daß aktuell ermittelte Messwerte $X_x$ in der Messgerät-Elektronik zwischengespeichert und so für nachfolgende Verwendungen vorgehalten werden können. In vorteilhafter Weise kann die Meßschaltung 21 desweiteren auch mittels des Signalprozessor DSP realisiert sein.

Wie bereits eingangs erwähnt, können Inhomogenitäten und/oder die Ausbildung erster und zweiter Mediumsphasen im strömenden Medium, beispielsweise in Flüssigkeiten mitgeführte Gasblasen und/oder Feststoffpartikeln, dazu führen, daß dieser in herkömmlicher Weise unter Annahme eines einphasigen und/oder homogenen Mediums ermittelte Meßwert noch nicht ausreichend genau mit der tatsächlichen Meßgröße x, beispielsweise dem tatsächlichen Massendurchfluß m, übereinstimmt, d.h. der Messwert muß dementsprechend korrigiert werden. Dieser vorab bestimmte, vorläufig die zu messende physikalische Meßgröße x repräsentierende oder zumindest mit dieser korrespondierende Messwert, der wie bereits ausgeführt beispielsweise eine zwischen Schwingungsmeßsignalen $s_1$, $s_2$ gemessene Phasendifferenz $\Delta\varphi$ oder eine gemessene Schwingungsfrequenz des Messrohrs 11 sein kann, wird daher im folgenden als ein Intialmeßwert oder auch Anfangsmesswert $X'_X$ bezeichnet. Aus diesem Anfangsmesswert $X'_x$ wiederum wird mittels der Auswerte-Elektronik 21 schließlich der die physikalische Meßgröße x ausreichend genau repräsentierende, beipielsweise als Massendurchfluß-Meßwert, als Dichte-Meßwert oder als Viskositäts-Meßwert dienende, Messwert $X_x$ abgleitet. In Anbetracht des sehr umfangreichen und sehr detailiert dokumentierten Standes der Technik kann ohne weiteres davon ausgegangen werden, dass die Ermittlung des Anfangsmesswerts $X'_x$, der praktisch dem in herkömmlicher Weise generierten Messwert entspricht, keinerlei Schwierigkeiten für den Fachmann darstellt, so daß für die weitere Erläuterung der Erfindung der Anfangsmesswert $X'_x$ als gegeben vorausgesetzt werden kann.

Bereits im Stand der Technik ist im Bezug auf die erwähnten Inhomogenitäten im Medium diskutiert worden, daß sich diese sowohl in der zwischen den beiden Schwingungsmeßsignalen $s_1$, $s_2$ gemessenen Phasendifferenz als auch in der Schwingungsamplitude oder der Schwingungsfrequenz jedes der beiden Schwingungsmeßsignale bzw. des Erregerstroms, also in praktisch jedem der bei Messgeräten der beschriebenen Art üblicherweise - direkt oder indirekt - gemessen Betriebsparameter, unmittelbar niederschlagen können. Dies gilt zwar im besonderen, wie auch in der WO-A 03/076880 oder der US-B 65 05 519 ausgeführt, für die bei lateral schwingendem Messrohr ermittelten Betriebsparameter; es kann aber auch für jene Betriebsparameter nicht immer ausgeschlossen werden, die bei torsional schwingendem Messrohr gemessen werden, vgl. hierzu insb. die US-A 45 24 610.

Weitergehende Untersuchungen seitens der Erfinder haben allerdings zu der überraschenden Erkenntnis geführt, daß zwar der momentane Erregerstrom $i_{exc}$ und, damit einhergehend, eine im Betrieb des Messgeräts üblicherweise ebenfalls gemessene Dämpfung der Schwingungen des Messrohrs 10 in erheblichem Maße vom Grade der Inhomogenität des zwei- oder mehrphasigen Mediums und/oder einer Konzentration einer zweiten Mediumsphase desselben abhängig ist, beispielsweise also von einer Ausprägung, einer Verteilung und/oder einer Menge von in einer zu messenden Flüssigkeit mitgeführten Gasblasen und/oder Feststoffpartikeln, dass aber sowohl für Lateral- als auch für Torsionsschwingungen - zumindest in den beiden oben erwähnten Grundmoden - ein weitgehend reproduzierbarer und somit zumindest experimentell ermittelbarer Zusammenhang zwischen dem jeweils für die Aufrechterhaltung der Lateral- bzw. Torsionsschwingung momentan erforderlichen Stromanteiles $i_{excL}$, $i_{excT}$ und dem momentanen Grade der Inhomogenität des zwei- oder mehrphasigen Mediums oder auch der momentanen Konzentration einer, insb. als Störung wirkenden, zweiten Mediumsphase postuliert werden kann.

Überraschenderweise hat es sich ferner gezeigt, dass, trotzdem sowohl eine momentane Dämpfung der Lateral-Schwingungen als auch, wie insb. in der US-A 45 24 610 oder der EP-A 1 291 639 diskutiert, eine momentane Dämpfung der Torsions-Schwingungen in erheblichem Maße vom Grad der Inhomogenität oder von den Konzentrationen einzelner Mediumsphasen abhängig sind, durch gleichzeitige oder zumindest zeitnahe Ermittlung der momentanen Dämpfungen beider Schwingungsmoden eine erstaunlich robuste wie auch sehr gut reproduzierbare Korrektur des Zwischenwerts $X'_x$ und somit die Generierung eines sehr genauen Meßwert $X_x$ ermöglicht werden. Weitergehende Untersuchungen haben nämlich gezeigt, daß die Dämpfung sowohl der Lateral-Schwingungen als auch der Torsions-Schwingungen zwar sehr stark von der Viskosität des zu messenden Mediums abhängig ist. Gleichwohl zeigt sich für die Dämpfung der Lateral-Schwingungen eine sehr starke Abhängigkeit vom Grad der Inhomogenitäten des im Messrohr 10 momentan geführten Mediums, während im Gegensatz dazu die Abhängigkeit der Dämpfung der Torsions-Schwingungen von Inhomogenitäten im Medium weitaus schwächer ausgeprägt ist.

Erfindungsgemäß wird der Messaufnehmer daher zum Zwecke der Verbesserung der Genauigkeit, mit der die physikalischen Meßgröße x, beispielsweise der Massendurchfluß m oder die Dichte p, ermittelt wird, zumindest zeitweise in dem oben bereits erwähnte Dual-Mode betrieben, bei dem das wenigstens eine Messrohr 10 - abwechselnd und/oder alternierend - im Lateral-Schwingungsmode und/oder im Torsions-Schwingungsmode vibrieren gelassen wird. Für die demgemäß erstrebte Korrektur des vorab ermittelten Anfangsmesswerts $X'_x$ werden im Betrieb mittels der Meßgerät-Elektronik 2 ein, insb. digitaler, erster Zwischenwert $X_1$, der im wesentlichen mit der Dämpfung des Lateral-Schwingungsmodes korrespondiert, und eine, insb. digitaler, zweiter Zwischenwert $X_2$, der im wesentlichen mit der vom Medium abhängigen Dämpfung des Torsions-Schwingungsmodes korrespondiert, ermittelt. Die Bestimmung des ersten Zwischenwerts $X_1$ erfolgt dabei im wesentlichen basierend auf dem für die Aufrechterhaltung der Lateral-Schwingungen erforderlichen, insb. geregelten, Lateral-Stromanteil $i_{excL}$ des Erregerstroms $i_{exc}$, während für die Ermittlung des zweiten Zwischenwerts $X_2$ im besonderen der für die Aufrechterhaltung der Torsions-Schwingungen erforderliche, insb. geregelte, Torsions-Stromanteil $i_{excT}$ berücksichtigt wird.

Unter Verwendung der beiden Zwischenwerte $X_1$, $X_2$ wird von der Meßschaltung 21 im weiteren ein, insb. ebenfalls digitalen, Korrekturwert $X_K$ für den Zwischenwert $X'_x$ ermittelt. Die Korrektur des Zwischenwerts $X'_x$ anhand des Korrekturwerts $X_K$ wie auch die Generierung des Meßwerts $X_x$ kann in der Messgerät-Elektronik beispielsweise basierend auf der mathematischen Beziehung

$$X_x = K_x \cdot (1 + X_K) \cdot X'_x$$

$$(1)$$

erfolgen.

Nach einer Ausgestaltung der Erfindung wird der Korrekturwert $X_K$ mittels der Meßgerät-Elektronik basierend auf der mathematischen Beziehung

$$X_K = K_K \cdot (X_1 - X_2)$$

$$(2)$$

bestimmt, so dass dieser praktisch ein Maß ist für eine Abweichung $\Delta D$ der im Betrieb gemessenen Dämpfungen der hauptsächlich angeregten Lateral- und der Torsionsschwingungen darstellt. Alternativ oder in Ergänzung dazu kann der Korrekturwert $X_K$ weiters auch basierend auf der mathematischen Beziehung

$$X_K = K_K \cdot (1 - \frac{X_2}{X_1})$$

$$(3)$$

ermittelt werden.

Während also in Gl. (2) der Korrekturwert $X_K$ anhand einer zwischen dem Zwischenwert $X_1$ und dem Zwischenwert $X_2$ bestehenden Differenz $\Delta D$ bestimmt wird, wird bei der Umsetzung von Gl. (3) der Korrekturwert $X_K$ anhand eines Vergleichs des zweiten Zwischenwerts $X_2$ mit dem ersten Zwischenwert $X_1$ bestimmt. Insoweit stellt der Korrekturwert $X_K$ zumindest für ein zweiphasiges Medium auch ein Maß für eine momentane, relative oder absolute Konzentration einer ersten und einer zweiten Mediumsphase, insb. für Gasblasen in einer Flüssigkeit, dar. Neben der Generierung des eigentlichen Meßwerts $X_x$ kann daher der Korrekturwert $X_K$ in vorteilhafter Weise ferner z.B. auch in eine Konzentrations-Meßwert Xc umgewandelt werden, der bei einem zwei- oder mehrphasigen Medium im Messrohr einen, insb. relative, Volumen- und/oder Massenanteil einer Mediumsphase repräsentiert. Weiters kann der Korrekturwert $X_K$ auch dazu verwendet werden, den Grad der Inhomogenität des Mediums oder davon abgeleitete Meßwerte, wie z.B. einen prozentualen Luftgehalt im Medium oder einen Volumen-, Mengen- oder Massenanteil von im Medium mitgeführten Feststoff-Partikeln, z.B. vor Ort oder in einer entfernten Leitwarte visuell wahrnehmbar, zu signalisieren. Alternativ dazu oder zusätzlich, kann der Korrekturwert $X_K$ auch dazu dienen, dem Anwender, beispielsweise ausgehend von einem Vergleich mit einen vorab definierten Grenzwert, zu signalisieren, daß bei den momentanen Strömungsverhältnissen im Messrohr 10, die Meßgröße x nur noch mit erheblicher Unsicherheit und/oder großen Ungenauigkeit gemessen werden kann. Im weiteren kann der Korrekturwert $X_K$ für diesen Fall auch dazu verwendet werden, einen Signalausgang abzuschalten, der den Messwert $X_x$ für die betroffene Meßgröße x betriebsgemäß ausgibt.

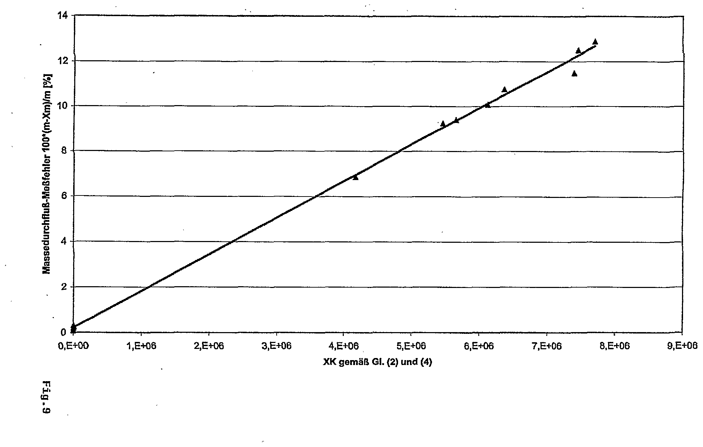

Weiterführende experimentelle Untersuchungen haben gezeigt, dass für einen Messaufnehmer gemäß dem gezeigten Ausführungsbeispiel die Berücsichtigung der momentanen Lateral-Schwingungsfrequenz des vibrierenden Messrohrs zu einer weiteren Verbesserung der Genauigkeit des Meßwerts $X_x$ führen kann. Darüber hinaus kann durch eine Normierung des gemäß der Gl. (2) oder Gl.(3) ermittelten Korrekturwerts $X_K$ auf die Quadratwurzel der momentanen Lateral-Schwingungsfrequenz erreicht werden, dass der Korrekturwert $X_K$, zumindest für den Fall, daß eine Flüssigkeit, beispielsweise Glycerin, mit eingeperlten Gasblasen, beispielsweise Luft, gemessen werden soll, im wesentlichen proportional zum Gasanteil ist, vgl. hierzu auch Fig. 9. Daher wird gemäß einer Weiterbildung der Erfindung die Gl. (2) unter Verwendung eines die momentane Lateral-Schwingungsfrequenz repräsentierenden Lateral-Schwingungsfrequenz-Meßwerts $X_{fexcL}$ folgendermaßen modifiziert:

$$X_K = K_K \cdot \frac{(X_1 - X_2)}{\sqrt{X_{fexcL}}}$$

(4)

Die Ermittlung des Lateral-Schwingungsfrequenz-Meßwerts kann in einfacher Weise z.B. anhand des oben erwähnten Lateralschwingungs-Frequenzstellsignals $y_{FML}$ erfolgen.

Bei der Ermittlung der beiden Zwischenwerte $X_1$, $X_2$ ist ferner zu beachten, daß die Dämpfung der Schwingungen des Meßrohrs 10, neben dem auf viskose Reibungen innerhalb des Mediums zurückzuführenden Dämpfungsanteil bekanntlich auch durch einen vom Medium praktisch unabhängigen Dämpfungsanteil mitbestimmt ist. Dieser Dämpfungsanteil wird von mechanischen Reibungskräften verursacht, die z.B. in der Erregeranordnung 40 und im Material des Meßrohr 10 wirken. Anders gesagt, der momentan gemessene Erregerstrom $i_{exc}$ repräsentiert die Gesamtheit der Reibungskräfte und/oder Reibungsmomente im Meßaufnehmer 10 einschließlich der mechanischen Reibungen im Meßaufnehmer sowei der viskosen Reibung im Medium. Bei der Ermittlung der Zwischenwert $X_1$, $X_2$, die, wie erwähnt, vornehmlich mit den auf viskose Reibungen im Medium zurückzuführenden Dämpfungsanteilen der Schwingungen des Messrohrs korrespondieren soll, sind die vom Medium unabhängigen, mechanischen Dämpfungsanteile entsprechend zu berücksichtigen, beispielsweise entsprechend zu separieren oder zu eleminieren.

Zum Ermitteln des Zwischenwerts $X_1$ wird daher gemäß einer Ausgestaltung der Erfindung von einem den Lateral-Stromanteil $i_{excL}$ momentan repräsentierenden, insb. digitalen, Lateral-Strommesswert $X_{iexcL}$ ein entsprechend zugeordneter Lateral-Leerstrommesswert $K_{iexcL}$ subtrahiert, der die im momentan angeregten Lateral-Schwingungsmode jeweils auftretenden mechanischen Reibungskräfte im Messaufnehmer bei entleertem Messrohr 10 repräsentiert. In gleicher Weise wird für die Ermittlung des Zwischenwerts $X_2$ von einem den Torsions-Stromanteil $i_{excT}$ momentan repräsentierenden, insb. digitalen, Torsions-Strommesswert $X_{iexcT}$ ein Torsions-Leerstrommesswert $K_{iexcT}$ abgezogen, der die im momentan angeregten Torsions-Schwingungsmode jeweils auftretenden mechanischen Reibungskräfte im Messaufnehmer bei entleertem Messrohr 10 repräsentiert.

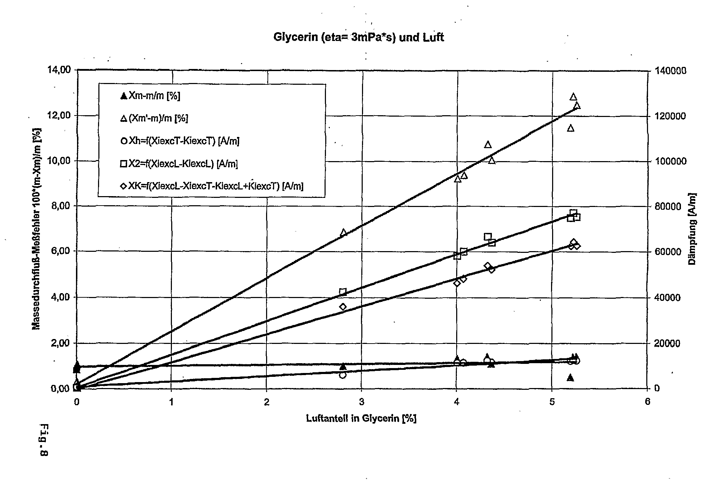

Nach einer weiteren Ausgestaltung der Erfindung erfolgt die Ermittlung des Zwischenwerts $X_1$, wie auch in Fig. 8 beispielshaft an experimentell für die Korrektur des Massedurchflusses ermittelten Strommesswerten $X_{iexcL}$, $X_{iexcT}$ und Leerstrommeßwerten $K_{iexcL}$, $K_{iexcT}$ gezeigt, anhand des Lateral-Schwingungen treibenden Lateral-Stromanteils $i_{excL}$ und anhand des zugehörigen Lateral-Leerstrommeßwerts $K_{iexcL}$, insb. basierend auf der mathematischen Beziehung

$$X_1 = K_1 * (X_{iexcL} - K_{iexcL})$$

(5)

und/oder basierend auf der mathematischen Beziehung

$$X_1 = K_1' * \left(1 - \frac{K_{iexcL}}{X_{iexcL}}\right)$$

(6)

Falls erforderlich, insb. bei im Betrieb erheblich variierenden und/oder von den kalibrierten Referenzwerten abweichenden Schwingungsamplituden des vibrierenden Meßrohrs, kann der Lateral-Stromanteil $i_{excL}$ vorab ebenfalls auf die momentane Schwingungsamplitude der Lateral-Schwingungen des Messrohrs, beispielsweise unter Verwendung der Schwingunsmeßsignale $s_1$, $s_2$, normiert werden.

Analog dazu kann auch der Zwischenwert $X_2$ basierend auf der mathematischen Beziehung

$$X_2 = K_2 \cdot (X_{iexcT} - K_{iexcT})$$

(7)

und/oder basierend auf der mathematischen Beziehung

$$X_2 = K'_2 \cdot (1 - K_{iexT}/X_{iexT})$$

(8)

ermittelt werden.

Jeder der Leerstrommeßwerte $K_{iexcL}$, $K_{iexcT}$ wie auch der gerätespezifischen Koeffizienten $K_k$, $K_k'$, $K_1$, $K_2$, $K_1'$ oder $K_2'$ ist ebenfalls während einer Kalibrierung des In-Line-Meßgeräts, z.B. bei evakuiertem oder ein nur Luft führendem Meßrohr, zu bestimmen und entsprechend in der Meßgeräte-Elektronik 50, insb. normiert auf die dabei gemessenen Schwingungsamplitude, abzuspeichern oder einzustellen. Es ist für den Fachmann ohne weiteres klar, daß falls erforderlich, andere die Leerstrommeßwerte $K_{iexcL}$, $K_{iexcT}$ beinflußende physikalische Parameter, wie z.B. eine momentane Temperatur des Meßrohrs und/oder des Mediums, bei deren Kalibrieren zu berücksichtigen sind. Zum Kalibrieren des Meßwerteaufnehmers 10 werden üblicherweise zwei oder mehrere verschiedene zwei-oder mehrphasige Medien mit variierenden, aber bekannten Strömungsparametern, wie z.B. bekannten Konzentrationen der einzelnen Mediumsphasen des Kalibriermediums, dessen Dichte p, Massedurchfluß m, Viskosität η und/oder Temperatur, nacheinander durch den Meßaufnehmer 10 hindurchströmen gelassen und die entsprechenden Reaktionen des Meßwerteaufnehmers 10, wie z.B. der momentane Erregerstrom $i_{exc}$, die momentane Lateralschwingungs-Erregerfrequenz $f_{excL}$ und/oder die momentane Torsionsschwingungs-Erregerfrequenz $f_{excT}$ gemessen. Die eingestellten Strömungsparameter und die jeweils gemessenen Reaktionen der gemessene Betriebsparameter des Meßaufnehmers 10 werden in entsprechender Weise zueinander in Relation gesetzt und somit auf die entsprechenden Kalibrierkonstanten abgebildet. Beispielsweise können zur Bestimmung der Konstanten bei der Kalibriermessung für zwei Kalibrier-Medien bekannter, möglichst konstant gehaltener Viskosität und in unterschiedlicher jedoch jeweils gleichbleibender Weise ausgebildeter Inhomogenität ein Verhältnis $X_x'/x$ und/oder $X_x/x$ des jeweils ermittelten Zwischenwerts $X_x'$ bzw. des jeweils ermittelten Meßwerts $X_x$ zum dann jeweils aktuellen, tatsächlichen Wert der zu messenden Meßgröße bei bekanntem Luftanteil gebildet. Beispielsweise kann als erstes Kalibrier-Medium strömendes Wasser oder auch Öl mit eingeperlten Luftblasen und als zweites Kalibrier-Medium möglichst homogenes Wasser oder auch verwendet werden. Die dabei ermittelten Kalibrierkonstanten können dann z.B. in Form von digitalen Daten in einem Tabellenspeicher der Messgerät-Elektronik abgelegt werden; sie können aber auch als analoge Einstellwerte für entsprechende Rechenschaltungen dienen. Es sei an dieser Stelle darauf verwiesen, daß das Kalibrieren von Meßaufnehmern der beschriebenen dem Fachmann an und für sich bekannt ist oder sich zumindest aus den obigen Ausführungen ergibt und daher keiner weiteren Erläuterung bedarf. In vorteilhafter Weise können zur Ermittlung des Lateral-Strommesswert $X_{iexcL}$ und/oder des Torsions-Strommesswerts

$X_{iexcT}$ das bereits erwähnten Lateralschwingungs-Amplitudenstellsignal $y_{AML}$ und/oder das Torsionsschwingungs-Amplitudenstellsignal $y_{AMT}$ verwendet werden, da diese den Errgerstrom $i_{exc}$ oder dessen Anteile $i_{excL}$, $i_{excT}$ für die Korrektur ausreichend genau repräsentieren.

Gemäß einer weiteren Ausgestaltung der Erfindung wird, für den bereits mehrfach erwähnten Fall, das die zu erfassende Meßgröße x einer Viskosität oder auch einer Fluidität entspricht und dementsprechend der Messwert $X_x$ als Viskositäts-Meßwert dient, auch der Anfangsmeßwert $X_x$' anhand des die Erregeranordnung 40 bei zumindest anteilig torsionsschwingendem Messrohr treibenden Erregerstroms $i_{exc}$, insb. anhand des dem Aufrechterhalten der Torsionsschwingungen des Meßrohrs 10 dienenden Torsions-Stromanteils $i_{excT}$ ermittelt. Unter Berücksichtigung des bereits in der US-A 45 24 610 beschriebenen Zusammenhangs:

$$\sqrt{\eta} \sim i_{excT}$$

(9)

demgemäß der Torsions-Stromanteil $i_{excT}$ reduziert um den oben erwähnten Torsions-Leerstrommesswert $K_{iexcT}$ zumindest bei konstanter Dichte, p, und weitgehend homogenen Medium sehr gut mit der Qudratwurzel der tatsächlichen Viskosität, $\eta$, korreliert ist, wird in entsprechender Weise für die Ermittlung des Anfangsmeßwerts $X_x$' zunächst intern der Meßgerät-Elektronik ein Quadratwert $X\Delta_{iexcT}^2$ des vom Erregerstrom $i_{exc}$ abgeleiteten, um den Torsions-Leerstrommesswert $K_{iexcT}$ reduzierten Torsions-Strommesswerts $X_{iexcT}$ gebildet. Eingedenk dessen, daß, wie auch in der

US-A 45 24 610 ausgeführt, vom Stromquadrat eigentlich die Information über das Produkt aus Dichte und Viskosität geliefert wird, ist bei der Ermittlung des Anfangsmeßwert $X_x$' in der vorbeschriebenen Weise außerdem die tatsächliche Dichte, die beispielsweise vorab ebenfalls mittels des In-Line-Meßgeräts ermittel werden kann, zu berücksichtigen.

Nach einer weiteren Ausgestaltung der Erfindung wird das Quadrat $X_{iexcT}^2$ des Torsions-Strommesswerts $X_{iexcT}$ zur Bildung des Anfangsmeßwerts $X\eta$ außerdem mittels einer einfachen numerischen Division auf einen Amplituden-Meßwert $X_{sT}$ normiert, der eine betriebsbedingt ggf. variierende Signalamplitude wenigstens eines der Schwingungsmeßsignale $s_1$, $s_2$ bei torsionsschwingendem Messrohr momentan repräsentiert. Es hat sich nämlich ferner gezeigt, daß für derartige Viskositäts-Meßgeräte mit einem solchen Meßaufnehmer vom Vibrationstyp, insb. auch bei konstant geregelter Schwingungsamplitude und/oder bei simultaner Anregung von Lateral- und Torsions-Schwingungen, ein Verhältnis $i_{exc}/\theta$ des Erregerstroms iexc zu einer praktisch nicht direkt meßbaren Geschwindigkeit $\theta$ einer die inneren Reibungen und somit auch die Reibungskräfte im Medium verursachenden Bewegung eine genauere Schätzung für die bereits erwähnte, den Auslenkungen des Meßrohrs 10 entgegenwirkenden Dämpfung ist. Daher ist zur weiteren Erhöhung der Genauigkeit des Meßwerts $X_x$, insb. aber auch zur Verringerung von dessen Empfindlichkeit auf im Betrieb ggf. schwankende Schwingungsamplituden des vibrierenden Meßrohrs 10, nach ferner vorgesehen, daß für die Ermittlung des Anfangsmeßwerts $X_x$' der Torsions-Strommesswert $X_{iexcT}$ zunächst auf den Amplituden-Meßwert $X_{sT}$ normiert wird, der die oben genannten Geschwindigkeit $\theta$ ausreichend genau repärsentiert. Anders gesagt es wird ein normierter Torsions-Strommesswert $X'_{iexcT}$ gemäß folgender Vorschrift gebildet:

$$X'_{iexcT} = \frac{X_{iexcT}}{X_{sT}}$$

(10)

Der Amplituden-Meßwert $X_{s1}$ wird, basierend auf der Erkenntnis, daß die die viskose Reibung im Medium verursachenden Bewegung, sehr stark mit der mittels des Sensors 51 oder auch mit der mittels des Sensors 52 örtlich erfaßten Bewegung des vibrierenden Meßrohrs 10 korrespondiert, bevorzugt mittels der Meßgerät-Elektronik 50, z.B. mittels interner Amplituden-Meßschaltung, vom wenigstens einen, ggf. bereits digitalisierten, Sensorsignal $s_1$ abgeleitet. Es sei an dieser Stelle nochmals darauf hingewiesen, daß das Sensorsignal $s_1$ bevorzugt proportional zu einer Geschwindigkeit einer, insb. lateralen, Auslenkungsbewegung des vibrierenden Meßrohrs 10; das Sensorsignal $s_1$ kann aber z.B. auch proportional zu einer auf das vibrierende Meßrohr 10 wirkenden Beschleunigung oder zu einem vom vibrierenden Meßrohr 10 zurückgelegten Weg sein. Für den Fall, daß das Sensorsignal $s_1$ im obigen Sinne geschwindigkeitsproportional ausgelegt ist, ist dies selbstverständlich entsprechend bei der Ermittlung des Anfangsmesswerts zu berücksichtigen.

Die vorgenannten, dem Erzeugen des Meßwertes $X_x$ dienenden Funktionen, symbolisiert durch die Gl. (1) bis (10), können zumindest teilweise mittels des Signalprozessors DSP oder z.B. auch mittels des oben erwähnten Mikrocomputers 55 realisiert sein. Das Erstellen und Implementieren von entsprechenden Algorithmen, die mit den vorbeschriebenen Gleichungen korrespondierenden oder die die Funktionsweise der Amplitudenregelschaltung 51 bzw. der Frequenzregelschaltung 52 nachbilden, sowie deren Übersetzung in in solchen Signalprozessoren ausführbare Programm-Codes ist dem Fachmann an und für sich geläufig und bedarf daher - jedenfalls in Kenntnis der vorliegenden Erfindung - keiner detaillierteren Erläuterung. Selbstverständlich können vorgenannte Gleichungen auch ohne weiteres ganz oder teilweise mittels entsprechender diskret aufgebauter analoger und/oder digitaler Rechenschaltungen in der Meßgerät-Elektronik 50 dargestellt werden.

Nach einer Weiterbildung der Erfindung wird zur Bestimmung des momentan geeigneten Korrekturwerts $X_K$ im Betrieb ausgehend von den Zwischenwerten $X_1$, $X_2$ dadurch praktisch direkt ermittelt, dass in der Meßgerät-Elektronik eine eindeutige Beziehung zwischen einer aktuellen Konstellationen der beiden Zwischenwerte $X_1$, $X_2$ und dem dazu passenden Korrekturwerts $X_K$ abgebildet, insb. einprogrammiert, ist. Hierzu weist die Meßgerät-Elektronik 2 ferner einen Tabellenspeicher auf, in dem ein Satz vorab, beispielsweise bei der Kalibrierung des Coriolis-Masseduchfluß-Meßgeräts, ermittelter digitaler Korrekturwerte $X_{K,i}$ abgelegt ist. Auf diese Korrekturwerte $X_{K,i}$ wird von der Messschaltung über eine mittels der momentan gültigen Zwischenwerte $X_1$, $X_2$ ermittelte Speicheradresse direkt zugegriffen. Der Korrekturwert $X_K$ kann z.B. dadurch in einfacher Weise ermittelt werden, daß eine Kombination der momentan ermittelten Zwischenwerten $X_1$, $X_2$, beispielsweise die oben erwähnte Dämpfungsdifferenz, mit entsprechenden im Tabellenspeicher eingetragenen Vorgabewerten für diese Kombination verglichen und daraufhin derjenige Korrekturwert $X_{K,i}$ ausgelesen, also von der Auswerte-Elektronik 2 für die weitere Berechnung verwendet wird, der mit dem der mommentanen Konstellation am nähesten kommenden Vorgabewert korrespondiert. Als Tabellenspeicher kann ein programmierbarer Festwertspeicher, also ein FPGA (field programmable gate array), ein EPROM oder ein EEPROM, dienen. Die Verwendung eines solchen Tabellenspeicher hat u.a. den Vorteil, daß der Korrekturwert $X_K$ nach der Berechnung der Zwischenwerte $X_1$, $X_2$ zur Laufzeit sehr rasch zur Verfügung steht. Zu dem können die in den Tabellenspeicher eingetragenen Korrekturwerte $X_{K,i}$ anhand von wenigen Kalibriermessungen vorab sehr genau, z.B. basierend auf den Gln. (2), (3) und/oder (4) und unter Anwendung der Methode der kleinsten Fehlerquadrate, ermittelt werden.

Wie sich aus den voranstehenden Ausführung ohne weiters erkennen lässt, kann eine Korrektur des Anfangs-messwerts $X'_x$ einerseits unter Verwendung weniger, sehr einfach zu bestimmender Korrekturfaktoren vorgenommen werden. Andererseits kann die Korrektur unter Verwendung der beiden Zwischenwerte $X_1$, $X_2$ mit einem Rechenaufwand durchgeführt werden, der im Vergleich zu den aus dem Stand der Technik bekannten, eher komplex ausgebildeten Rechenverfahren sehr gering ausfällt. Ein weiterer Vorteil der Erfindung ist ferner auch darin zu sehen, dass zumindest einige der vorbeschriebenen Korrekturfaktoren ohne weiteres von den beispielsweise mittels herkömmlicher Coriolis-Massedurchflußmeßgeräten ermittelter Strömungsparametern, insb. der gemessenen Dichte und/oder dem - hier vorläufig - gemessenen Massendurchfluß, und/oder von den im Betrieb von Coriolis-Massedurchflußmeßgeräten üblicherweise direkt gemessenen Betriebsparametern, insb. den gemessenen Schwingungsamplituden, Schwingungsfrequenzen und/oder dem Erregerstrom, selbst abgleitet und somit praktisch ohne deutliche Erhöhung des schaltungs- und meßtechnischen Aufwands generiert werden können.


## Patentansprüche

1.  In-Line-Meßgerät, insb. Coriolis-Massedurchfluß-/Dichtemessgerät oder Coriolis-Massedurchfluß-/Dichte- und Viskositätsmeßgerät, zum Messen wenigstens einer physikalischen Meßgröße, x, nämlich eines Massedurchflusses, m, eines in einer Rohrleitung geführten, insb. zwei- oder mehrphasigen, Mediums, welches In-Line-Meßgerät einen Meßaufnehmer (1) vom Vibrationstyp und eine mit dem Meßaufnehmer elektrisch gekoppelte Meßgerät-Elektronik (2) umfaßt,

    - wobei der Meßaufnehmer (1) aufweist:

        -- mindestens ein in den Verlauf der Rohrleitung eingesetztes, insb. im wesentlichen gerades, und dem Führen des zu messenden Mediums dienendes Meßrohr (10), das mit der angeschlossenen Rohrleitung kommuniziert,
        -- eine auf das Meßrohr (10) einwirkende Erregeranordnung (40) zum Vibrierenlassen des wenigstens einen Meßrohrs (10),

            --- die das Meßrohr (10) im Betrieb zumindest zeitweise und/oder zumindest anteilig in Lateralschwingungen, nämlich Biegeschwingungen versetzt, und
            --- die das Messrohr (10) im Betrieb zumindest zeitweise und/oder zumindest anteilig in, insb. mit den Lateralschwingungen alternierende oder diesen zeitweise überlagerte, Torsionsschwingungen um eine gedachte, mit dem Meßrohr (10) im wesentlichen fluchtende, insb. als eine Trägheitshauptachse des Messrohrs (10) ausgebildete, Messrohrlängsachse versetzt, sowie

-- eine Sensoranordnung (50) zum Erfassen von Vibrationen des wenigstens einen Meßrohrs (10), die wenigstens ein Schwingungen des Meßrohrs (10) repräsentierendes Schwingungsmeßsignal ($s_1$, $s_2$) liefert,

- wobei die Meßgerät-Elektronik (2) zumindest zeitweise einen die Erregeranordnung (40) treibenden Erregerstrom ($i_{exc}$) liefert,
- wobei die Meßgerät-Elektronik (2) ferner

-- einen ersten Zwischenwert ($X_1$), der

--- mit einem dem Aufrechterhalten der Lateralschwingungen des Meßrohrs (10) dienenden Lateral-Stromanteil ($i_{excL}$) des Erregerstroms ($i_{exc}$) und
--- mit einer Dämpfung der Lateralschwingungen des Messrohrs (10) korrespondiert, sowie

-- einen zweiten Zwischenwert ($X_2$), der

--- mit einem dem Aufrechterhalten der Torsionsschwingungen des Meßrohrs (10) dienenden Torsions-Stromanteil ($i_{excT}$) des Erregerstroms ($i_{exc}$) und
--- mit einer Dämpfung der Torsionsschwingungen des Messrohrs (10) korrespondiert, ermittelt und

- wobei die Meßgerät-Elektronik (2)

-- mittels des wenigstens einen Schwingungsmeßsignal ($s_1$, $s_2$) und/oder mittels des Erregerstrom ($i_{exc}$) sowie
-- unter Verwendung des ersten und des zweiten Zwischenwerts ($X_1$, $X_2$) zumindest zeitweise wenigstens einen Meßwert ($X_x$) generiert, der die wenigstens eine zu messende physikalische Meßgröße, nämlich den Massedurchfluß, m, repräsentiert,

- wobei die Meßgerät-Elektronik (2) einen von dem wenigstens einen Schwingungsmeßsignal ($s_1$, $s_2$) abgeleiteten Anfangsmesswert ($X'_x$), der mit der wenigstens einen zu messenden Meßgröße zumindest näherungsweise korrespondiert, ermittelt,
- und wobei die Meßgerät-Elektronik (2) anhand des ersten und des zweiten Zwischenwerts ($X_1$, $X_2$) einen Korrekturwert ($X_K$) für den Anfangsmesswert ($X'_x$) ermittelt und den Meßwert ($X_x$) mittels des Anfangsmesswerts ($X'_x$) und des Korrekturwerts ($X_K$) generiert.

2. In-Line-Meßgerät nach Anspruch 1, bei dem das Meßrohr (10), angetrieben von der Erregeranordnung (40), Torsionsschwingungen mit einer Meßrohr-Torsisonsschwingfrequenz ausführt, die verschieden eingestellt ist von einer Meßrohr-Biegeschwingfrequenz mit der das Messrohr (10), angetrieben von der Erregeranordnung (40), Lateralschwingungen ausführt.

3. In-Line-Meßgerät nach einem der vorherigen Ansprüche,

- bei dem das Messrohr (10) mit der angeschlossenen Rohrleitung über ein in ein Einlaßende (11#) mündendes Einlaßrohrstück (11) und über ein in ein Auslaßende (12#) mündendes Auslaßrohrstück (12) kommuniziert, und
- bei dem der Meßaufnehmer einen am Einlaßende (11#) und am Auslaßende (12#) des Messrohrs (10) fixierten, insb. auch mit der Erregeranordnung mechanischen gekoppelten, Gegenschwinger (20) umfasst, der im Betrieb zumindest zeitweise, insb. gegenphasig zum Messrohr (10), vibriert.

4. In-Line-Meßgerät nach dem vorherigen Anspruch, bei dem die Meßgerät-Elektronik (2) den Korrekturwert ($X_K$) anhand eines Vergleichs des ersten Zwischenwerts ($X_1$) mit dem zweiten Zwischenwert ($X_2$) und/oder anhand einer zwischen dem ersten Zwischenwert ($X_1$) und dem zweiten Zwischenwert ($X_2$) bestehenden Differenz ermittelt.

5. In-Line-Meßgerät nach einem der vorherigen Ansprüche, bei dem die Meßgerät-Elektronik (2) den ersten und/oder den zweiten Zwischenwert ($X_1$, $X_2$) auch unter Verwendung des wenigstens einen Schwingungsmeßsignals ($s_1$, $s_2$) erzeugt.

6. In-Line-Meßgerät nach einem der Ansprüche 1 bis 5, bei dem die Meßgerät-Elektronik (2) anhand des ersten und des zweiten Zwischenwerts ($X_1$, $X_2$) zumindest zeitweise einen Konzentrations-Meßwert (Xc) ermittelt, der bei einem zwei- oder mehrphasigen Medium im Messrohr (10) einen, insb. relative, Volumen- und/oder Massenanteil einer Mediumsphase repräsentiert.

7. In-Line-Meßgerät nach einem der Ansprüche 1 bis 5, bei dem die Sensoranordnung (50)

- wenigstens ein erstes Schwingungsmeßsignal ($s_1$), das zumindest anteilig einlaßseitige Lateralschwingungen, insb. Biegeschwingungen, des Meßrohrs (10) repräsentiert, und
- wenigstens ein zweites Schwingungsmeßsignal ($s_2$), das zumindest anteilig auslaßseitige Lateralschwingungen, insb. Biegeschwingungen, des Meßrohrs (10) repräsentiert, liefert.

8. In-Line-Meßgerät nach dem vorherigen Anspruch,

- wobei die Messgerät-Elektronik den Anfangsmesswert ($X'_x$) unter Verwendung der beiden Schwingungsmeßsignale ($s_1$, $s_2$) in der Weise ermittelt, dass dieser mit dem zu messenden Massedurchfluß, $m$, und/oder mit einer Phasendifferenz, $\Delta\varphi$, zwischen den beiden Schwingungsmeßsignalen ($s_1$, $s_2$) korrespondiert.

9. Verwendung eines In-Line-Meßgerät nach einem der vorherigen Ansprüche zum Messen einer physikalischen Meßgröße, insb. eines Massedurchflusses, einer Dichte und/oder einer Viskosität, eines in einer Rohrleitung strömenden zwei- oder mehrphasigen Mediums, insb. eines Flüssigkeits-Gas-Gemisches.

10. Verfahren zum Messen einer physikalischen Meßgröße, nämlich eines Massedurchflusses, m, eines in einer Rohrleitung strömenden, insb. zwei- oder mehrphasigen, Mediums, mittels eines In-Line-Meßgeräts mit einem Meßaufnehmer (1) vom Vibrationstyp, insb. eines Coriolis-Massendurchflußmeßgeräts, und einer mit dem Meßaufnehmer (1) elektrisch gekoppelten Meßgerät-Elektronik (2), welches Verfahren folgende Schritte umfasst:

- Strömenlassen des zu messenden Mediums durch wenigstens ein mit der Rohrleitung kommunizierendes Messrohr (10) des Meßaufnehmers (1) und Einspeisen eines Erregerstroms ($i_{exc}$) in eine mit dem das Medium führenden Meßrohr (10) mechanisch gekoppelten Erregeranordnung (40) zum Bewirken von mechanischen Schwingungen des Meßrohrs (10),
- Bewirken von Lateralschwingungen, nämlich Biegeschwingungen des Meßrohrs (10) und Bewirken von, insb. den Lateralschwingungen überlagerten, Torsionsschwingungen des Meßrohrs (10),
- Erfassen von Vibrationen des Meßrohrs (10) und Erzeugen wenigstens eines Schwingungen des Messrohrs (10) repräsentierenden Schwingungsmeßsignals ($s_1$, $s_2$),
- Ermitteln eines vom Erregerstrom ($i_{exc}$) abgeleiteten ersten Zwischenwerts ($X_1$), der

- mit einem dem Aufrechterhalten der Lateralschwingungen des Meßrohrs (10) dienenden Lateral-Stromanteil ($i_{excL}$) des Erregerstroms ($i_{exc}$) und
- mit einer Dämpfung der Lateralschwingungen des Messrohrs (10) korrespondiert,

- Ermitteln eines vom Erregerstrom ($i_{exc}$) abgeleiteten zweiten Zwischenwerts ($X_2$), der

--- mit einem dem Aufrechterhalten der Torsionsschwingungen des Meßrohrs (10) dienenden Torsions-Stromanteil ($i_{excT}$) des Erregerstroms ($i_{exc}$) und
--- mit einer Dämpfung der Torsionsschwingungen des Messrohrs (10) korrespondiert, und

- Verwenden des wenigstens einen Schwingungsmeßsignals ($s_1$, $s_2$) und/oder des Erregerstroms ($i_{exc}$) sowie des ersten und des zweiten Zwischenwerts ($X_1$, $X_2$) zum Erzeugen eines die zu messenden physikalische Meßgröße, x, repräsentierenden Meßwerts ($X_x$),
- wobei der Schritt des Erzeugens des Meßwerts ($X_x$) folgende Schritte umfasst:

-- Entwickeln eines mit der zu messenden physikalischen Meßgröße, x, zumindest näherungsweise korrespondierenden Anfangsmesswerts ($X'_x$) unter Verwendung des wenigstens einen Schwingungsmeßsignals ($s_1$, $s_2$),
-- Erzeugen eines Korrekturwertes ($X_K$) für den Anfangswert ($X'_x$) mittels des ersten und des zweiten Zwischenwerts ($X_1$, $X_2$), sowie
-- Korrigieren des Anfangsmesswerts ($X'_x$) mittels des Korrekturwertes ($X_K$) zum Erzeugen des Meßwerts ($X_x$).

**11.** Verfahren nach dem vorherigen Anspruch, wobei der Schritt des Erzeugens des Meßwerts ($X_x$) folgende Schritte umfasst:

- Entwickeln des Anfangsmesswerts ($X'_x$) unter Verwendung auch des Erregerstroms (iexc).

**12.** Verfahren nach dem vorherigen Anspruch, bei dem der Schritt des Erzeugens des Korrekturwertes ($X_K$) für den Anfangsmesswert ($X'x$) folgende Schritte umfasst:

- Vergleichen des ersten Zwischenwerts ($X_1$) mit dem zweiten Zwischenwert ($X_2$) zum Ermitteln einer zwischen den beiden Zwischenwerten ($X_1$, $X_2$) bestehenden Differenz und
- Ermitteln eines Konzentrations-Meßwerts ($Xc$), der bei einem zwei- oder mehrphasigen Medium im Messrohr einen, insb. relative, Volumen- und/oder Massenanteil einer Mediumsphase repräsentiert, unter Berücksichtigung der zwischen den beiden Zwischenwerten ($X_1$, $X_2$) bestehenden Differenz.


**Claims**

**1.** In-line measuring device, particularly a Coriolis mass flowmeter/density meter or a Coriolis mass flowmeter/density meter and viscosity meter, designed to measure at least one physical measured variable, x, particularly a mass flow, m, of a medium, particularly bi-phase or multi-phase, conducted in a pipe, wherein said in-line measuring device comprises a vibronic-type sensor (1) and a measuring device electronics unit (2) electrically coupled to the sensor,

- wherein the sensor (1) comprises:

-- at least one measuring tube (10) inserted in the course of the pipe, particularly a tube that is essentially straight and designed to conduct the medium to be measured, said tube communicating with the connected pipe,
-- an exciter arrangement (40) acting on the measuring tube (10), designed to make the at least one measuring tube (10) vibrate,

--- which, during operation, causes the measuring tube (10) to vibrate at least temporarily and/or at least partially with lateral vibrations, particularly flexural vibrations, and
--- which, during operation, causes the measuring tube (10) to vibrate at least temporarily and/or at least partially with torsional vibrations - particularly alternating with the lateral vibrations or temporarily superimposed on said lateral vibrations - around an imaginary measuring tube longitudinal axis, essentially aligned with the measuring tube (10) and particularly formed as a main axis of inertia of the measuring tube (10), as well as

-- a sensor arrangement (50) designed to measure vibrations of the at least one measuring tube (10) that delivers at least a vibration measuring signal ($s_1$, $s_2$) that represents vibrations of the measuring tube (10),

- wherein the measuring device electronics unit (2) at least temporarily delivers a excitation current ($I_{exc}$) that drives the exciter arrangement (40),
- wherein the measuring device electronics unit (2) further determines

-- a first intermediate value ($X_1$), which corresponds

--- to a lateral current part ($i_{excL}$) of the excitation current ($i_{exc}$), said part serving to maintain the lateral vibrations of the measuring tube (10) and
--- to a damping of the lateral vibrations of the measuring tube (10), as well as

-- a second intermediate value ($X_2$), which corresponds

--- to a torsional current part ($i_{excT}$) of the excitation current ($i_{exc}$), said part serving to maintain the torsional vibrations of the measuring tube (10) and
--- to a damping of the torsional vibrations of the measuring tube (10), and

- wherein the measuring device electronics unit (2)

-- using the at least one vibration measuring signal ($s_1$, $s_2$) and/or using the excitation current ($i_{exc}$) and
-- using the first and the second intermediate value ($X_1$, $X_2$), at least temporarily generates at least one measured value ($X_x$), which represents the at least one physical measured variable to be measured, particularly the mass flow, m,

- wherein the measuring device electronics unit (2) determines an initial measured value ($X'_x$) derived from the at least one vibration measuring signal ($s_1$, $s_2$), which corresponds at least approximately to the at least one measured variable to be measured,
- and wherein the measuring device electronics unit (2) determines, using the first and the second intermediate value ($X_1$, $X_2$), a correction value ($X_K$) for the initial measured value ($X'_x$) and generates the measured value ($X_x$) using the initial measured value ($X'_x$) and the correction value ($X_K$).

2. In-line measuring device as claimed in Claim 1, wherein the measuring tube (10), excited by the exciter arrangement (40), produces torsional vibrations with a measuring tube torsional vibration frequency, which is set differently to a measuring tube flexural vibration frequency with which the measuring tube (10), excited by the exciter arrangement (40), produces lateral vibrations.

3. In-line measuring device as claimed in one of the previous claims,

- wherein the measuring tube (10) communicates with the connected pipe via an inlet tube piece (11) that enters into an inlet end (11#) and via an outlet tube piece (12) that enters into an outlet end (12#), and
- wherein the sensor comprises a counter-vibrator (20), which is fixed at the inlet end (11#) and at the outlet end (12#) of the measuring tube (10), said counter-vibrator being also particularly coupled mechanically to the exciter arrangement, and wherein said counter-vibrator vibrates during operation, at least temporarily, particularly in a manner that is out of phase with the measuring tube (10).

4. In-line measuring device as claimed in the previous claim, wherein the measuring device electronics unit (2) determines the correction value ($X_K$) using a comparison of the first intermediate value ($X_1$) with the second intermediate value ($X_2$) and/or using a difference existing between the first intermediate value ($X_1$) and the second intermediate value ($X_2$).

5. In-line measuring device as claimed in one of the previous claims, wherein the measuring device electronics unit (2) generates the first and/or the second intermediate value ($X1$, $X_2$) also using the at least one vibration measuring signal ($s_1$, $s_2$).

6. In-line measuring device as claimed in one of the Claims 1 to 5, wherein the measuring device electronics unit (2) at least temporarily determines, using the first and the second intermediate value ($X_1$, $X_2$), a concentration measured value ($X_C$), which represents, in the event of a bi-phase or multi-phase medium in the measuring tube (10), a, particularly relative, volume share and/or mass share of a medium phase.

7. In-line measuring device as claimed in one of the Claims 1 to 5, wherein the sensor arrangement (50) delivers

- at least a first vibration measuring signal ($s_1$), which at least partially represents inlet-side lateral vibrations, particularly flexural vibrations, of the measuring tube (10), and
- at least a second vibration measuring signal ($s_2$), which at least partially represents outlet-side lateral vibrations, particularly flexural vibrations, of measuring tube (10).

8. In-line measuring device as claimed in the previous claim,

- wherein the measuring device electronics unit determines the initial measured value ($X'_x$) using the two vibration measuring signals ($s_1$, $s_2$) in such a way that said value corresponds to the mass flow, m, to be measured, and/or to a phase difference, $\Delta\varphi$, between the two vibration measuring signals ($s_1$, $s_2$).

9. In-line measuring device as claimed in one of the previous claims, designed to measure a physical measured variable, particularly a mass flow, a density and/or a viscosity, of a bi-phase or multi-phase medium flowing through a pipe, particularly a liquid/gas mixture.

**10.** Procedure designed to measure a physical measured variable, particularly a mass flow, m, of a medium, particularly bi-phase or multi-phase, flowing through a pipe, using an in-line measuring device with a vibronic-type sensor (1), particularly a Coriolis mass flowmeter, and a measuring device electronics unit (2) electrically coupled with the sensor (1), said procedure comprising the following steps:

- Medium is allowed to flow through at least a measuring tube (10) of the sensor (1) that communicates with the pipe, and feeding of an excitation current ($I_{exc}$) into an exciter arrangement (40) mechanically coupled with the measuring tube (10) conducting the medium, for the purpose of generating mechanical vibrations of the measuring tube (10),

- Production of lateral vibrations, particularly flexural vibrations of the measuring tube (10), and torsional vibrations - particularly superposed on the lateral vibrations - of the measuring tube (10),

- Measurement of the vibrations of the measuring tube (10) and generation of at least a vibration measuring signal ($s_1$, $s_2$) representing the vibrations of the measuring tube (10),

- Determination of a first intermediate value ($X_1$) derived from the excitation current ($i_{exc}$), which corresponds

-- to a lateral current part ($i_{excL}$) of the excitation current ($i_{exc}$), said part serving to maintain lateral vibrations of the measuring tube (10) and

-- to a damping of the lateral vibrations of the measuring tube (10)

- Determination of a second intermediate value ($X_2$) derived from the excitation current ($i_{exc}$), which corresponds

-- to a torsional current part ($i_{excT}$) of the excitation current ($i_{exc}$), said part serving to maintain the torsional vibrations of the measuring tube (10) and

-- to a damping of the torsional vibrations of the measuring tube (10), and

- Utilization of the at least one vibration measuring signal ($s_1$, $s_2$) and/or excitation current ($i_{exc}$) as well as the first and the second intermediate value ($X_1$, $X_2$) for the purpose of generating a measured value ($X_x$) representing the physical measured variable, x, to be measured,

- wherein the step involving the generation of the measured value ($X_x$) comprises the following steps:

-- Development of an initial measured value ($X'_x$) - corresponding at least approximately to the physical measured variable, x, to be measured - and using the at least one vibration measuring signal ($s_1$, $s_2$),

-- Generation of a correction value ($X_K$) for the initial value ($X'_x$) using the first and the second intermediate value ($X_1$, $X_2$), as well as

-- Correction of the initial measured value ($X'_x$) using the correction value ($X_K$) for the purpose of generating the measured value ($X_x$).

**11.** Procedure as claimed in the previous claim, wherein the step involving the generation of the measured value ($X_x$) comprises the following step:

- Development of the initial measured value ($X'_x$) also using the excitation current ($i_{exc}$) .

**12.** Procedure as claimed in the previous claim, wherein the step involving the generation of the correction value ($X_K$) for the initial measured value ($X'_x$) comprises the following steps:

- Comparison of the first intermediate value ($X_1$) with the second intermediate value ($X_2$) for the purpose of determining a difference existing between the two intermediate values ($X_1$, $X_2$), and

- Determination of a concentration measured value ($X_C$), which represents, in the event of a bi-phase or multi-phase medium in the measuring tube, a, particularly relative, volume part and/or mass part of a medium phase, taking into account the difference that exists between the two intermediate values ($X_1$, $X_2$).

**Revendications**

**1.** Appareil de mesure en ligne, notamment un débitmètre massique Coriolis / densimètre ou un débitmètre massique Coriolis / densimètre / viscosimètre, destiné à la mesure d'au moins une grandeur physique, x, notamment un débit massique, m, d'un produit, notamment biphasique ou polyphasique, guidé dans une conduite, lequel appareil de mesure en ligne comprend un capteur (1) du type à vibrations et une électronique d'appareil de terrain (2) couplée électriquement avec le capteur,

- le capteur (1) comprenant :

-- au moins un tube de mesure (10) inséré dans le tracé de la conduite, notamment un tube pour l'essentiel droit et destiné à guider le produit à mesurer, lequel tube communique avec la conduite raccordée,
-- un circuit d'excitation (40) agissant sur le tube de mesure (10), destiné à faire entrer en vibrations l'au moins un tube de mesure (10),

--- qui, en fonctionnement, fait entrer le tube de mesure (10) au moins temporairement et/ou au moins partiellement en vibrations latérales, notamment des vibrations de flexion, et
--- qui, en fonctionnement, fait entrer le tube de mesure (10) au moins temporairement et/ou au moins partiellement en vibrations de torsion - notamment alternant avec les vibrations latérales ou qui leurs sont superposées temporairement - autour d'un axe longitudinal de tube de mesure imaginaire, aligné pour l'essentiel avec le tube de mesure (10) et notamment formé en tant qu'axe principal d'inertie du tube de mesure (10), ainsi que

-- un circuit capteur (50) destiné à la mesure des vibrations de l'au moins un tube de mesure (10), qui fournit au moins un signal de vibration ($s_1$, $s_2$) représentant les vibrations du tube de mesure (10),

- l'électronique d'appareil de mesure (2) fournissant au moins temporairement un courant d'excitation ($I_{exc}$) commandant le circuit d'excitation (40),
- l'électronique d'appareil de mesure (2) déterminant en outre

-- une première valeur intermédiaire ($X_1$), qui correspond

--- avec une part de courant latérale ($i_{excL}$) du courant d'excitation ($i_{exc}$), laquelle part sert au maintien des vibrations latérales du tube de mesure (10) et
--- avec un amortissement des vibrations latérales du tube de mesure (10), ainsi que

-- une deuxième valeur intermédiaire ($X_2$), qui correspond

--- avec une part de courant de torsion ($i_{excL}$) du courant d'excitation ($i_{exc}$), laquelle part sert au maintien des vibrations de torsion du tube de mesure (10) et
--- avec un amortissement des vibrations de torsion du tube de mesure (10), et

- l'électronique d'appareil de mesure (2) génère

-- au moyen de l'au moins un signal de mesure de vibration ($s_1$, $s_2$) et/ou au moyen du courant d'excitation ($i_{exc}$) ainsi que
-- en utilisant la première et la deuxième valeur intermédiaire ($X_1$, $X_2$), au moins temporairement au minimum une valeur mesurée ($X_x$), qui représente l'au moins une grandeur physique à mesurer, notamment le débit massique, m,

- l'électronique d'appareil de mesure (2) déterminant une valeur mesurée initiale ($X'_x$) dérivée de l'au moins un signal de mesure de vibration ($s_1$, $s_2$), qui correspond au moins approximativement avec l'au moins une grandeur à mesurer,
- et l'électronique d'appareil de mesure (2) déterminant, au moyen de la première et de la deuxième valeur intermédiaire ($X_1$, $X_2$) une valeur de correction ($X_K$) pour la valeur mesurée initiale ($X'_x$) et générant la valeur mesurée ($X_x$) au moyen de la valeur mesurée initiale ($X'_x$) et de la valeur de correction ($X_K$).

2. Appareil de mesure en ligne selon la revendication 1, pour lequel le tube de mesure (10), excité par le circuit d'excitation (40), exécute des vibrations de torsion avec une fréquence de vibrations de torsion de tube de mesure, qui est réglée différemment d'une fréquence de vibrations de flexion de tube de mesure avec laquelle le tube de mesure (10), excité par le circuit d'excitation (40), exécute des vibrations latérales.

3. Appareil de mesure en ligne selon l'une des revendications précédentes,

**EP 1 725 840 B1**

- pour lequel le tube de mesure (10) communique avec la conduite raccordée via un élément de tube d'entrée débouchant dans une extrémité d'entrée (11#) et via un élément de tube de sortie débouchant dans une extrémité de sortie (12#), et
- pour lequel le capteur comprend un contre-vibrateur (20) fixé à l'extrémité d'entrée (11#) et à l'extrémité de sortie (12#) du tube de mesure (10), lequel contre-vibrateur est notamment également couplé mécaniquement avec le circuit d'excitation, et lequel contre-vibrateur vibre, en fonctionnement, au moins temporairement, notamment en opposition de phase, par rapport au tube de mesure (10).

4. Appareil de mesure en ligne selon la revendication précédente, pour lequel l'électronique d'appareil de mesure (2) détermine la valeur de correction ($X_K$) au moyen d'une comparaison de la première valeur intermédiaire ($X_1$) avec la deuxième valeur intermédiaire ($X_2$) et/ou au moyen d'une différence existant entre la première valeur intermédiaire ($X_1$) et la deuxième valeur intermédiaire ($X_2$).

5. Appareil de mesure en ligne selon l'une des revendications précédentes, pour lequel l'électronique d'appareil de mesure (2) génère la première et/ou la deuxième valeur intermédiaire ($X1, X_2$) également en utilisant l'au moins un signal de mesure de vibration ($s_1, s_2$).

6. Appareil de mesure en ligne selon l'une des revendications 1 à 5, pour lequel l'électronique d'appareil de mesure (2) détermine, au moyen de la première et de la deuxième valeur intermédiaire ($X_1, X_2$), au moins temporairement une valeur mesurée de concentration ($X_C$), qui représente, dans le cas d'un produit biphasique ou polyphasique dans le tube de mesure (10), une part, notamment relative, du volume et/ou de la masse d'une phase du produit.

7. Appareil de mesure en ligne selon l'une des revendications 1 à 5, pour lequel le circuit capteur (50) délivre

- au moins un premier signal de mesure de vibration ($s_1$), qui représente au moins partiellement les vibrations latérales côté entrée, notamment les vibrations de flexion, du tube de mesure (10), et
- au moins un deuxième signal de mesure de vibration ($s_2$), qui représente au moins partiellement les vibrations latérales côté sortie, notamment les vibrations de flexion, du tube de mesure (10).

8. Appareil de mesure en ligne selon la revendication précédente,

- pour lequel l'électronique d'appareil de mesure détermine la valeur mesurée initiale ($X'_x$) en utilisant les deux signaux de mesure de vibration ($s_1, s_2$) de telle sorte que cette valeur corresponde avec le débit massique, m, à mesurer, et/ou avec une différence de phase, $\Delta\varphi$, entre les deux signaux de mesure de vibration ($s_1, s_2$).

9. Appareil de mesure en ligne selon l'une des revendications précédentes, destiné à la mesure d'une grandeur physique, notamment un débit massique, une densité et/ou une viscosité, d'un produit biphasique ou polyphasique s'écoulant dans une conduite, notamment un mélange liquide-gaz.

10. Procédé destiné à la mesure d'une grandeur physique, notamment un débit massique, m, d'un produit, notamment biphasique ou polyphasique, s'écoulant dans une conduite, au moyen d'un appareil de mesure en ligne avec un capteur (1) du type à vibrations, notamment un débitmètre massique Coriolis, et une électronique d'appareil de terrain (2) couplée électriquement avec le capteur (1), lequel procédé comprend les étapes suivantes :

- Écoulement du produit à mesurer à travers au moins un tube de mesure (10) du capteur (1), lequel tube communique avec la conduite, et injection d'un courant d'excitation ($I_{exc}$) dans un circuit d'excitation (40) couplé mécaniquement à la conduite guidant le produit, en vue de générer des vibrations mécaniques du tube de mesure (10),
- Déclenchement de vibrations latérales, notamment de vibrations de flexion du tube de mesure (10) et déclenchement de vibrations de torsion - notamment superposées aux vibrations latérales - du tube de mesure (10),
- Mesure des vibrations du tube de mesure (10) et génération d'au moins un signal de mesure de vibration ($s_1, s_2$) représentant les vibrations du tube de mesure (10),
- Détermination d'une première valeur intermédiaire ($X_1$) dérivée du courant d'excitation ($i_{exc}$), qui correspond

-- avec une part de courant latérale ($i_{excL}$) du courant d'excitation ($i_{exc}$), laquelle part sert au maintien des vibrations latérales du tube de mesure (10) et
-- avec un amortissement des vibrations latérales du tube de mesure (10)

- Détermination d'une deuxième valeur intermédiaire ($X_2$) dérivée du courant d'excitation ($i_{exc}$), qui correspond

-- avec une part de courant de torsion ($i_{excL}$) du courant d'excitation ($i_{exc}$), laquelle part sert au maintien des vibrations de torsion du tube de mesure (10) et
-- avec un amortissement des vibrations de torsion du tube de mesure (10), et

- Utilisation de l'au moins un signal de mesure de vibration ($s_1$, $s_2$) et/ou du courant d'excitation ($i_{exc}$) ainsi que de la première et de la deuxième valeur intermédiaire ($X_1$, $X_2$) en vue de la génération d'une valeur mesurée ($X_x$) représentant la grandeur physique, x, à mesurer,
- L'étape de la génération de la valeur mesurée ($X_x$) comprenant les étapes suivantes :

-- Développement d'une valeur mesurée initiale ($X'_x$) - correspondant au moins approximativement avec la grandeur physique, x, à mesurer - en utilisant l'au moins un signal de mesure de vibration ($s_1$, $s_2$),
-- Génération d'une valeur de correction ($X_K$) pour la valeur initiale ($X'_x$) au moyen de la première et de la deuxième valeur intermédiaire ($X_1$, $X_2$), ainsi que
-- Correction de la valeur mesurée initiale ($X'_x$) au moyen de la valeur de correction ($X_K$) en vue de la génération de la valeur mesurée ($X_x$).

11. Procédé selon la revendication précédente, pour lequel l'étape de la génération de la valeur mesurée ($X_x$) comprend l'étape suivante :

- Développement de la valeur mesurée initiale ($X'_x$) en utilisant également le courant d'excitation ($i_{exc}$).

12. Procédé selon la revendication précédente, pour lequel l'étape de la génération de la valeur de correction ($X_K$) pour la valeur mesurée initiale ($X'_x$) comprend les étapes suivantes :

- Comparaison de la première valeur intermédiaire ($X_1$) avec la deuxième valeur intermédiaire ($X_2$) en vue de la détermination d'une différence existant entre les deux valeurs intermédiaires ($X_1$, $X_2$), et
- Détermination d'une valeur mesurée de concentration ($X_C$), qui représente, dans le cas d'un produit biphasique ou polyphasique dans le tube de mesure, une part, notamment relative, du volume et/ou de la masse d'une phase du produit, en tenant compte de la différence existant entre les deux valeurs intermédiaires ($X_1$, X2).

Fig. 1

Fig. 2

Fig. 3

Fig. 4

Fig. 5

[Fig. 004]

Fig. 6

Fig. 7

Glycerin (eta= 3mPa*s) und Luft

Fig. 8

EP 1 725 840 B1

32

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03095950 A
- WO 03095949 A
- WO 03076880 A
- WO 0237063 A
- WO 0133174 A
- WO 0057141 A
- WO 9939164 A
- WO 9807009 A
- WO 9516897 A
- WO 8803261 A
- US 20030208325 A
- US 6691583 B
- US 66515113 B
- US 6513393 B
- US 6505519 B
- US 6006609 A
- US 5869770 A
- US 5796011 A
- US 5616868 A
- US 5602346 A
- US 5602345 A
- US 5531126 A
- US 5301557 A
- US 5253533 A
- US 5218873 A
- US 5069074 A
- US 4876898 A
- US 4733569 A
- US 4660421 A
- US 4524610 A
- US 4491025 A
- US 4187721 A
- EP 1291639 A
- EP 1281938 A
- EP 1001254 A
- EP 553939 A
- US 5448921 A
- US 2003233878 A1
- US 6651513 B
- WO 0036379 A
- JP 10281846 A
- US 4801897 A
- US 5648616 A
- EP 1158289 A
- US 5969265 A
- EP 317340 A
- WO 0014485 A
- US 6505519 A
- EP 866319 A